# EUROPÄISCHE PATENTSCHRIFT

(11) **EP 2 706 045 B1**
(45) Veröffentlichungstag und Bekanntmachung des Hinweises auf die Patenterteilung: **08.03.2017**
(21) Anmeldenummer: 13180048.4
(22) Anmeldetag: 12.08.2013
(51) Int. Cl.: C02F 9/00

(54) **Verfahren zur Behandlung eines Abwasserstroms, der bei der Aufarbeitung eines Triacetonamin-haltigen Reaktionsgemisches entsteht**
Method for the treatment of a waste water flow resulting from the processing of a reaction mixture containing triacetonamine
Procédé de traitement d'un flux d'eaux usées formé lors du traitement d'un mélange réactif contenant de la triacétonamine

(30) Priorität: 07.09.2012 DE 102012215903
(43) Veröffentlichungstag der Anmeldung: 12.03.2014
(73) Patentinhaber: Evonik Degussa GmbH, 45128 Essen (DE)
(72) Erfinder: Niemeyer, Jochen, 48153 Münster (DE); Neumann, Manfred, 45770 Marl (DE); Brehme, Volker, 48301 Nottuln (DE); Michel, Mirko, 44227 Dortmund (DE); Schwarz, Christoph, 45768 Marl (DE)

(56) Entgegenhaltungen:
- WO-A1-2007/036500
- DE-A1- 3 222 370
- DE-A1- 19 608 463

## Beschreibung

Die vorliegende Erfindung betrifft ein Verfahren zur Behandlung von allen Abwasserströmen, welche sich aus einem homogen katalysierten Herstellungsverfahren von Triacetonamin ergeben können.

### Hintergrund der Erfindung

Triacetonamin (2,2,6,6-Tetramethyl-4-piperidinon; TAA) ist ein wichtiges chemisches Intermediat, welches zur Synthese zahlreicher Folgeprodukte eingesetzt wird. Wichtige Folgeprodukte sind dabei beispielsweise Lichtstabilisatoren (hindered amine light stabilizers [HALS]), Oxidationsmittel und Polymerisationsmoderatoren (z. B. Nitroxyl-Radikale).

Die Herstellung von Triacetonamin aus Aceton und Ammoniak ist in der Form verschiedener Verfahren dokumentiert. Dabei gliedern sich die Herstellungsverfahren zunächst grob in die direkte (einschrittige) Synthese von TAA aus den Edukten, beispielsweise beschrieben in DE2429937, US4536581, JP54088275 oder in Zeitschrift für Naturforschung 1976, 328-337 und 338-345, sowie die indirekte (zweistufige) Synthese über Acetonin (2,2,4,4,6-Pentamethyl-1,2,5,6-tetrahydropyrimidin), beispielsweise beschrieben in DE2429935 oder DE2429936, oder über Phoron (2,6-Dimethyl-2,5-heptadien-4-on), z.B. in DE2352127. Bei der zweistufigen TAA-Synthese über Acetonin wird dies zunächst ausgehend von Aceton und Ammoniak gebildet, und kann dann in einem anschließenden Schritt unter Abspaltung von einem Äquivalent Ammoniak weiter zu TAA reagieren. Im Falle des Syntheseverfahrens über Acetonin werden beide Spezies (TAA und Acetonin) gleichzeitig gebildet, die Acetoninbildung ist allerdings kinetisch gegenüber der TAA-Bildung stark bevorzugt. In der "einstufigen" TAA-Synthese wird das entstehende Acetonin lediglich nicht isoliert.

Die Herstellung von TAA ist sowohl homogen katalysiert (meist durch Ammoniumsalze) als auch heterogen katalysiert (z. B. an sauren lonentauschern) möglich.

Die meisten Schriften aus dem Stand der Technik beziehen sich auf homogen katalysierte Reaktionen. Als mögliche Katalysatoren werden dabei am häufigsten Calciumchlorid (z.B. in Chemical Industries 2003, 89, 559-564; Zeitschrift für Naturforschung 1976 328-337 und 338-345), Ammoniumchlorid (z.B. in JP2003-206277; JP2001-031651; JP04154762) und Hydrazinderivate (z.B. in JP54088275; JP54112873A) genannt.
Bei der Triacetonaminherstellung bildet sich neben den organischen Reaktionsprodukten als Nebenprodukt Wasser. Am Ende der Reaktion wird daher ein Reaktionsgemisch aus organischen Komponenten, Wasser und dem Katalysator erhalten, wobei der Katalysator homogen gelöst ist.
Bei der vollständigen Aufarbeitung des Reaktionsgemisches entsteht daher in jedem Fall ein Strom, welcher aus Wasser (Reaktionswasser, d.h. nicht zusätzlich zugeführtes Wasser) besteht oder zumindest wasserhaltig ist. Dieser Strom kann nicht in die Reaktion zurückgeführt werden und muss daher einer Entsorgung zugeführt werden.
Darüber hinaus kann es sein, dass zur Aufarbeitung des Reaktionsgemisches Hilfsstoffe eingesetzt werden, welche entweder zusammen mit dem im Reaktionsgemisch enthaltenen Wasser eine wässrige Phase ausbilden, oder welche direkt als wässrige Lösungen eingesetzt werden. Bei Verwendung dieser Hilfsstoffe bzw. ihrer wässrigen Lösungen werden zusätzliche wasserhaltige Ströme generiert, welche zwar gegebenenfalls zunächst intern rückgeführt werden können, letztlich aber ebenfalls einer Entsorgung zugeführt werden müssen.
Die einzelnen bei der Triacetonaminherstellung erhaltenen Abwasserströme werden im Folgenden genauer beschrieben.

### Wasserströme, welche aus gebildetem Reaktionswasser resultieren

Das in der Reaktion gebildete Reaktionswasser (bei der Kondensation von Aceton und Ammoniak zu TAA entstehen zwei Äquivalente Wasser) muss aus dem Prozess ausgeschleust werden und kann nicht vollständig zurückgeführt werden, da sonst das Reaktionsgleichgewicht in ungünstiger Weise beeinflusst würde.

Bei einer destillativen Aufarbeitung des Triacetonamin-Rohproduktes wird das Reaktionswasser als eine Destillationsfraktion erhalten. Es bilden sich bei der TAA-Bildungsreaktion jedoch Nebenprodukte, welches sich entweder gar nicht (durch Azeotropbildung, z.B. Mesityloxid [4-Methylpent-3-en-2-on]) oder nur sehr schwer (aufgrund sehr ähnlicher Siedepunkte) von Wasser trennen lassen. Im Falle des Mesityloxid-Wasser Azeotrops lässt sich nach Kondensation aufgrund der Mischungslücke bei niedriger Temperatur zwar eine Trennung zwischen wässriger Phase und organischer Phase durchführen, es wird jedoch eine wässrige Phase erhalten, welche mit organischen Komponenten belastet ist. Insbesondere ist dieser wässrige Strom mit organischen Komponenten belastet, welche einen ähnlichen Siedepunkt wie Wasser aufweisen oder mit diesem ein Azeotrop bilden (z.B. Aceton, Mesityloxid, Diacetonalkohol [4-Hydroxy-4-methylpentan-2-on], Diacetonamin [4-Amino-4-methylpentan-2-on], TMDH-Pyridin [2,2,4,6-Tetramethyl-2,3-dihydropyridin], Acetonin).

Diese stark belastete wässrige Phase ist für eine externe Abgabe (z.B. an eine Kläranlage) ungeeignet und muss daher zunächst eine Nachbehandlung erfahren.

### Wasserströme, welche aus der Verwendung zusätzlicher Hilfsstoffe zur Deaktivierung des Katalysators resultieren

Vor der destillativen Aufarbeitung eines triacetonaminhaltigen Reaktionsgemisches, welches einen homogen gelösten Katalysator (z.B. ein Ammoniumsalz) enthält, muss eine Deaktivierung des Katalysators erfolgen. Erfolgt dies nicht, so kann während der Destillation nur ein geringer Teil des zunächst im Reaktionsgemisch enthaltenen TAA als Reinprodukt isoliert werden kann (JP04154763; S. 5, Zeile 14-16, siehe Tabelle ab S. 4). Die Anwesenheit des Katalysators während der Destillation führt einerseits zu einer Spaltung des TAA zu niedermolekularen Komponenten (Rückreaktion der Bildungsreaktion) und andererseits zu weiteren Kondensationsreaktionen unter Bildung von höhermolekularen Komponenten, welche keiner weiteren Verwendung zugeführt werden können.

Insofern ist eine Deaktivierung des Katalysators vor der Aufarbeitung des Reaktionsgemisches zwingend notwendig. "Deaktivierung des Katalysators" bedeutet, dass der saure Katalysator, welcher beispielsweise im TAA-haltigen Rohprodukt vorhanden ist, in eine katalytisch nicht aktive Form überführt wird. Diese erfolgt durch Zugabe eines geeigneten Hilfsstoffes, insbesondere durch Zugabe von mindestens 1 molaren Äquivalent Base, bezogen auf die Menge des eingesetzten Katalysators [z.B. beschrieben in JP2003-206277; JP2001-031651; JP04154763; US4536581; G. Sosnovsky & M. Konieczny, Synthesis, 1976, 735-736; JP05140104; Plastic Additives 2006, 5(59), 46; A. Formenti & P. Piccinelli, Chimica e l'lndustria, 2000, 82(5), 569-571]. Besonders bevorzugt wird die Zugabe von 1 bis 2 molaren Äquivalenten Base, ganz besonders bevorzugt von 1 bis 1.4 molaren Äquivalenten Base, und am bevorzugtesten von 1.2 molaren Äquivalenten Base, bezogen auf die Menge des eingesetzten Katalysators. Die Base (M⁺B⁻) reagiert mit dem entsprechenden sauren Katalysator. Ist der Katalysator ein Ammoniumsalz (AH⁺X⁻), so reagiert die Base (M⁺B⁻) zu dem entsprechenden freien Amin (A), der konjugierten Säure (HB) sowie einem inerten Salz (M⁺X⁻). Wird speziell die Deaktivierung von Ammoniumchlorid (AH⁺X⁻) mit NaOH (M⁺B⁻) betrachtet, so entstehen Ammoniak (A), Wasser (HB) und Natriumchlorid (M⁺X⁻). Gleichsam enstehen bei der Deaktivierung von Ammoniumnitrat (AH⁺X⁻) mit NaOH (M⁺B⁻) als Produkte Ammoniak (A), Wasser (HB) und Natriumnitrat (M⁺X⁻).

Häufig bildet sich bei dieser Zugabe eine wässrige Phase aus, welche einen Teil des Wassers und des Salzes enthält und abgetrennt werden kann. Die organische Phase kann dann einer weiteren Aufarbeitung (z.B. einer Destillation) zugeführt werden.

Die abgetrennte wässrige Phase enthält mindestens einen Teil der bei der Deaktivierung des Katalysators entstandenen Komponenten, sowie mindestens einen Teil des Hilfsstoffes selbst, falls dieser im Überschuss eingesetzt wurde. Bei Verwendung einer Base (z.B. NaOH, KOH) als Hilfsstoff enthält die wässrige Phase demnach (jeweils mindestens einen Teil) des freien Amins (A; z.B. Ammoniak, Amine, Hydrazine), der konjugierten Säure (HB; z.B. Wasser) und des entstandenen Salzes (M⁺X⁻; z.B. NaCl, KCl, NaNO₃, KNO₃), sowie evtl. einen Teil der Base (M⁺B⁻; z.B. NaOH, KOH), falls diese im Überschuss eingesetzt wurde.

Darüber hinaus ist die wässrige Phase aufgrund der Tatsache, dass sie direkt mit der organischen Phase in Kontakt stand, mit organischen Komponenten belastet. Die Konzentration der organischen Komponenten in der wässrigen Phase hängt dabei von den Konzentrationen in den organischen Phasen sowie von den jeweiligen Verteilungsgleich-gewichten zwischen der organischen und der wässrigen Phase ab. So ist die wässrige Phase im Besonderen belastet mit Aceton, Triacetonamin, Mesityloxid, Diacetonalkohol, Diacetonamin, TMDH-Pyridin, Acetonin, Phoron u.A. Besonders die Belastung mit TAA ist problematisch, da dieses nur eine sehr geringe biologische Abbaubarkeit besitzt.

Aufgrund der Anwesenheit von Base (M⁺B⁻) und der Anwesenheit von organischen Aminen weist die wässrigen Phase zudem einen hohen pH-Wert auf. Dieser liegt bei pH > 7, meist sogar bei pH > 12.

Diese stark belastete wässrige Phase ist daher für eine externe Abgabe (z.B. an eine Kläranlage) ungeeignet. Speziell die Anwesenheit von Salzen (ungeeignet für eine biologische Nachbehandlung), der niedrige pH-Wert, sowie die Anwesenheit von organischen Komponenten (z.B. TAA) erfordern eine spezielle Nachbehandlung.

### Wasserströme, welche aus der Verwendung zusätzlicher Hilfsstoffe zur vollständigen Extraktion des deaktivierten Katalysators resultieren

Erfolgt (wie oben beschrieben) eine Deaktiverung des Katalysators durch Zugabe eines Hilfsstoffes und Abtrennung einer resultierenden wässrigen Phase, so verbleibt ein Teil des Wassers (Reaktionswasser und/oder Wasser aus dem Hilfsstoff) sowie ein Teil der aus der Deaktivierung gebildeten Komponenten (z.B. gebildete Salze) bzw. ein Teil der zur Deaktivierung hinzugesetzten Hilfsstoffe selbst in der organischen Phase. Beispielsweise findet sich bei Verwendung von NaOH zur Deaktivierung von Ammoniumchlorid in der organischen Phase neben Wasser auch ein Teil des Salzes (NaCl).

Für die weitere Prozessführung ist es gegebenenfalls wünschenswert, das in der organischen Phase verbliebene anorganische Salz vollständig zu entfernen. Dazu ist die Verwendung von zusätzlichen Hilfsstoffen notwendig. So kann z.B. eine erneute Zugabe einer Base erfolgen. Daraus resultiert die erneute Bildung einer wässrigen Phase, welche wie im Falle der Deaktivierung des Katalysators beschrieben belastet ist (A, HB, M⁺X⁻, M⁺B⁻, organische Komponenten). Diese stark belastete wässrige Phase ist ebenfalls für eine externe Abgabe (z.B. an eine Kläranlage) ungeeignet.

### Allgemeine Zusammensetzung der Abwasserströme, welche sich aus einem Verfahren zur homogen-katalysierten Herstellung von TAA ergeben können und welche bevorzugt mittels des erfindungsgemäßen Verfahrens behandelt werden können

Aus genannten Gründen fallen bei der homogen katalysierten Herstellung von TAA einer oder mehrere Abwasserströme an, welche für eine Abgabe an eine Kläranlage oder an die Umwelt ungeeignet sind und daher behandelt werden müssen. Dabei ist die ausgeführte Beschreibung der Prozessschritte, welche zur Entstehung eines Abwasser führen, lediglich examplarisch gemeint und ist ohne Anspruch auf Vollständigkeit und in keiner Weise limitierend in Bezug auf das Abwasser, welches durch das erfindungsgemäße Verfahren behandelt werden kann.

Im Stand der Technik ist eine Abwasser-Nachbehandlung im Anschluss an das Triacetonamin-Herstellungsverfahren in Plastic Additives 2006, 5(59), 46 (Abbildung 2) beschrieben.
Dort wird eine Deaktivierung des Ammoniumnitrat-Katalysators durch Zugabe von Natriumhydroxid (fest) durchgeführt. Daraus resultiert eine wässrige Phase, welche Ammoniak, Natriumnitrat, Natriumhydroxid (Überschuss) sowie organische Komponenten enthält. Die Aufarbeitung geschieht wie folgt:
1) Filtration;
2) Strippung;
3) Abkühlen und Kristallisation von Natriumnitrat;
4) Aufkonzentration der verbleibenden NaOH/NaNO₃ Lösung;
5) Wiederverwendung dieser Lösung zur Deaktivierung des Katalysators (statt fester NaOH).

Dieser Prozess zeigt allerdings einige Nachteile, sowohl in Bezug auf die einzelnen beschriebenen Schritte als auch in Bezug auf die Anwendbarkeit des Gesamtprozesses.

In Bezug auf die einzelnen beschriebenen Aufarbeitungsschritte weist die Abwasseraufarbeitung in Plastic Additives 2006, 5(59), 46 folgende Unzulänglichkeiten auf:
1) Durch Abkühlen der NaOH/NaNO₃ Lösung (Schritt 3) ist aufgrund der guten Löslichkeit von NaNO₃ keine vollständige Entfernung von NaNO₃ möglich. Es resultiert also eine Lösung, die zwar an NaNO₃ abgereichert ist, jedoch immer noch beträchtliche Mengen an NaNO₃ enthält. So wurde von den Erfindern der vorliegenden Erfindung gefunden, das auf diese Weise lediglich ca. 30% des Natriumnitrats entfernt werden. Insgesamt wird also die größte Menge des Natriumnitrats lediglich intern zurückgeführt, die Ausschleusung aus dem Prozess durch Kristallisation ist nicht effektiv.
2) Um eine Wiederverwendung der NaOH/NaNO₃ Lösung zu ermöglichen muss diese wie erwähnt aufkonzentriert werden. Bei einer Aufkonzentration durch Destillation muss ein Weg gefunden werden, ein Destillat herzustellen, welches seinerseits ohne weitere Nachbehandlung abgegeben werden kann (z.B. an eine Kläranlage). In Plastic Additives 2006, 5(59), 46 wird dies jedoch nicht näher beschrieben. Es ist deshalb davon auszugehen, dass am Ende der Destillation wiederum ein großer, nicht verwertbarer Abfallstrom resultiert, der so belastet ist, dass er zur Abgabe an eine Kläranlage nicht geeignet ist,
In Bezug auf die Anwendbarkeit des Gesamtprozesses auf eine effiziente TAA-Herstellung weist die in Plastic Additives 2006, 5(59), 46 beschriebene Abwasseraufarbeitung folgende Unzulänglichkeiten auf:
3) Die beschriebene Entfernung von Natriumnitrat durch Kristallisation ist nur unvollständig. Auf diese Weise wird der Hauptteil des Natriumnitrats bei Rückführung der wässrigen Phase wieder in den Prozess eingebracht und dort erneut mit einer organischen Phase in Kontakt gebracht. Auf Basis des entsprechenden Verteilungsgleichgewichtes führt dies zu einer Anreicherung von Natriumnitrat in der organischen Phase. Dies ist ungünstig für die spätere Prozessführung, da sich das Natriumnitrat bei einer destillativen Aufarbeitung der organischen Phase im Destillationssumpf akkumuliert.
4) Soll eine derartige Akkumulation des Natriumnitrates bei einer destillativen Aufarbeitung der organischen Phase verhindert werden, so bietet sich eine weitgehende Entfernung des Natriumnitrates vor der Destillation an. Eine solche Entfernung kann durch Extraktion der organischen Phase mit einem Extraktionsmittel erfolgen, dieses darf jedoch kein Natriumnitrat enthalten, da sonst aufgrund des Verteilungsgleichgewichtes keine weitgehende Entfernung aus der organischen Phase möglich ist. Als Extraktionsmittel kann daher nicht die in Plastic Additives 2006, 5(59), 46 beschriebene aufkonzentrierte NaOH/NaNO3-Lösung verwendet werden, es müsste alternativ z.B. eine reine NaOH-Lösung zusätzlich verwendet werden, welche wiederum einen Abfallstrom generiert. Die Behandlung eines solchen Abfallstromes ist mit den in Plastic Additives 2006, 5(59), 46 beschriebenen Methoden nicht möglich.

Die übrigen Dokumente des Standes der Technik beschreiben ebenfalls die homogen katalytische Herstellung von Triacetonamin, gehen jedoch nur auf die Zugabe von Base zur Deaktivierung des Katalysators unter Generierung eines Abwassers ein, nicht jedoch auf die weitere Behandlung des entstandenen Abwassers (JP2003-206277; JP2001-031651; JP04154763; Synthesis 1976, 735-736, US4536581).

Wie die oben beschriebenen Unzulänglichkeiten behoben werden könnten, geht auch nicht aus der allgemeinen Fachliteratur hervor. So eignen sich die von James W. Patterson, "Industrial Wastewater Treatment Technology", Second Edition, 1985 (die im Folgenden genannten Seitenzahlen beziehen sich auf dieses Werk) beschriebenen Schritte nicht zur Behandlung der in der TAA-Herstellung anfallenden Abwässer. So ist eine Nitratwiederverwendung (S. 263) nicht in allen Fällen möglich. Auch die biologische Denitrifizierung (S. 264-266) sowie ein lonenaustauschverfahren (S. 266-268) könnne aufgrund der hohen Salzkonzentrationen der bei der TAA-Herstellung anfallenden wässrigen Ströme nicht angewandt werden. Bezüglich der Entfernung organischer Bestandteile weisen James W. Patterson, "Industrial Wastewater Treatment Technology", Second Edition, 1985 zwar auf das Stripping-Verfahren hin (S. 304), dennoch sind die weiteren zur Entfernung organischer Bestandteile genannten Verfahren nicht anwendbar im Falle der hier beschriebenen Abwasserströme. So ist eine Phasentrennung (Seite 301) nicht anwendbar, da die in den Abwasserströmen befindlichen organischen Bestandteile gelöst sind. Für die direkt aus dem TAA-Herstellungsverfahren resultierenden Abwasserströme ist ein Adsorptionsverfahren (S. 329) ebenso wenig anwendbar, da diese einen zu hohen Anteil an organischen Verbindungen enthalten. Eine biologische Behandlung (S. 340) zur Entfernung der organischen Bestandteile ist, wie schon im Falle der Nitratentfernung diskutiert, auch im Falle der organischen Verunreinigungen aufgrund der hohen Salzkonzentrationen nicht möglich und wird zusätzlich dadurch verkompliziert, dass Triacetonamin biologisch schwer abbaubar ist. Eine pH-Wert-Einstellung durch Zugabe von Schwefelsäure oder Salzsäure, wie auf S. 363 beschrieben ist ebenfalls nicht vorteilhaft, wenn wie im Falle der TAA-Abwasserströme, Nitrat vorliegt und nach der Neutralisation eine chemisch möglichst einheitliche Lösung erhalten werden soll.

Im Lichte des Standes der Technik stellte sich daher die Aufgabe, ein verbessertes Verfahren zur Behandlung der bei der Herstellung von Triacetonamin anfallenden wässrigen Ströme zur Verfügung zu stellen. Insbesondere sollte es das Verfahren ermöglichen, die oben beschriebenen Abwasserströme zu verwerten. Die Behandlung dieser Ströme soll dabei möglichst einfach und kostengünstig sein. Das finale Produkt der Abwasserbehandlung soll zu einem Produkt führen, welches einen kommerziellen Wert besitzt, und im gleichen Zuge soll der Anteil an Bestandteilen, welche einer Verbrennung, Deponierung oder sonstigen Entsorgung zugeführt werden müssen, möglichst gering gehalten werden. Das verbesserte Verfahren soll es außerdem ermöglichen, das aus dem Gemisch entfernte Wasser bis zu einer Qualität aufarbeiten zu können, die es erlaubt, dieses Wasser direkt an eine Kläranlage oder sogar an die Umgebung abzugeben.

### Kurzbeschreibung der Erfindung

Es wurde nun überraschenderweise gefunden, dass die oben genannte Aufgabe durch ein Verfahren gemäß der vorliegenden Erfindung gelöst wird. Das erfindungsgemäße Verfahren bietet dabei den Vorteil, dass in einer speziellen Aufarbeitungssequenz der Anfall von schwer zu entsorgenden Sonderabfällen minimiert werden, wobei hochreines Wasser sowie ein hochreines Produkte (bzw. eine hochreine Produktlösung) aus der Aufarbeitung erhalten werden. Demnach ist ein erster Gegenstand der vorliegenden Erfindung ein
1. Verfahren zur Behandlung einer eingesetzten wässrigen Phase, welche eine bei der Herstellung von Triacetonamin anfallende wässrige Lösung ist, bestehend aus
   a) Entfernung von ersten organischen Bestandteilen aus der eingesetzten wässrigen Phase durch Extraktion mit einem Extraktionsmittel, wobei eine zweite wässrige Phase und ein das Extraktionsmittel enthaltendes Extrakt erhalten werden;
   b) Entfernung von zweiten organischen Bestandteilen aus der zweiten wässrigen Phase durch Destillation und/oder Strippung, wobei eine dritte wässrige Phase erhalten wird;
   c) Entfernung von Wasser aus der dritten wässrigen Phase durch Destillation, wobei eine vierte wässrige Phase und eine abgetrennte wässrige Phase erhalten werden, wobei die abgetrennte wässrige Phase das aus der dritten Phase entfernte Wasser umfasst;
   d) Entfernung von dritten organischen Bestandteilen aus der vierten wässrigen Phase und Aufhellung der vierten wässrigen Phase durch Adsorption, wobei eine fünfte wässrige Phase erhalten wird;
   wobei in einem zusätzlichen Schritt e) ein pH-Wert der eingesetzten, zweiten, dritten, vierten und/oder fünften wässrigen Phase mit einem Hilfsstoff eingestellt wird.
2. In einer weiteren Ausführungsform der Erfindung ist das Verfahren gemäß Gegenstand 1 dadurch gekennzeichnet, dass sich Schritt c) direkt an Schritt b) anschließt und im Schritt e) der pH-Wert der eingesetzten, zweiten, vierten und/oder fünften wässrigen Phase mit einem Hilfsstoff eingestellt wird.
3. In einer weiteren Ausführungsform der Erfindung ist das Verfahren gemäß Gegenstand 1 oder 2 dadurch gekennzeichnet, dass sich Schritt c) direkt an Schritt b) anschließt und im Schritt e) der pH-Wert der eingesetzten und/oder zweiten wässrigen Phase mit einem Hilfsstoff eingestellt wird.
4. In einer weiteren Ausführungsform der Erfindung ist das Verfahren gemäß Gegenstand 1 dadurch gekennzeichnet, dass im Schritt e) der pH-Wert der eingesetzten, zweiten und/oder dritten wässrigen Phase mit einem Hilfsstoff eingestellt wird.
5. In einer weiteren Ausführungsform der Erfindung ist das Verfahren gemäß einem oder mehreren der Gegenstände 1 bis 4 dadurch gekennzeichnet, dass im Schritt e) der pH-Wert der zweiten wässrigen Lösung mit einem Hilfsstoff eingestellt wird.
6. In einer weiteren Ausführungsform der Erfindung ist das Verfahren gemäß einem oder mehreren der Gegenstände 1 bis 5 dadurch gekennzeichnet, dass in einem zusätzlichen Schritt f) das in Schritt a) erhaltene Extrakt aufgearbeitet wird.
7. In einer weiteren Ausführungsform der Erfindung ist das Verfahren gemäß einem oder mehreren der Gegenstände 1 bis 6 dadurch gekennzeichnet, dass in einem zusätzlichen Schritt f) das in Schritt a) erhaltene Extrakt aufgearbeitet wird, wobei eine Auftrennung zwischen den extrahierten organischen Bestandteilen und dem Extraktionsmittel erfolgt.
8. In einer weiteren Ausführungsform der Erfindung ist das Verfahren gemäß einem oder mehreren der Gegenstände 1 bis 7 dadurch gekennzeichnet, dass in einem zusätzlichen Schritt f) das in Schritt a) erhaltene Extrakt aufgearbeitet wird, wobei eine Auftrennung zwischen den extrahierten organischen Bestandteilen und dem Extraktionsmittel erfolgt, und die Auftrennung durch Destillation erfolgt.
9. In einer weiteren Ausführungsform der Erfindung ist das Verfahren gemäß einem oder mehreren der Gegenstände 1 bis 8 dadurch gekennzeichnet, dass in einem zusätzlichen Schritt f) das in Schritt a) erhaltene Extrakt aufgearbeitet wird, wobei eine Auftrennung zwischen den extrahierten organischen Bestandteilen und dem Extraktionsmittel erfolgt, und diese Aufarbeitung bei einem Druck im Bereich von 0.1 bis 10 bar stattfindet.
10. In einer weiteren Ausführungsform der Erfindung ist das Verfahren gemäß einem oder mehreren der Gegenstände 1 bis 9 dadurch gekennzeichnet, dass in einem zusätzlichen Schritt f) das in Schritt a) erhaltene Extrakt aufgearbeitet wird, wobei eine Auftrennung zwischen den extrahierten organischen Bestandteilen und dem Extraktionsmittel erfolgt, und diese Aufarbeitung bei einem Druck im Bereich von 0.5 bis 5 bar stattfindet.
11. In einer weiteren Ausführungsform der Erfindung ist das Verfahren gemäß einem oder mehreren der Gegenstände 1 bis 10 dadurch gekennzeichnet, dass in einem zusätzlichen Schritt f) das in Schritt a) erhaltene Extrakt aufgearbeitet wird, wobei eine Auftrennung zwischen den extrahierten organischen Bestandteilen und dem Extraktionsmittel erfolgt, und diese Aufarbeitung bei einem Druck im Bereich von 1 bis 3 bar stattfindet.
12. In einer weiteren Ausführungsform der Erfindung ist das Verfahren gemäß einem oder mehreren der Gegenstände 1 bis 11 dadurch gekennzeichnet, dass in einem zusätzlichen Schritt f) das in Schritt a) erhaltene Extrakt aufgearbeitet wird, wobei eine Auftrennung zwischen den extrahierten organischen Bestandteilen und dem Extraktionsmittel erfolgt, und diese Aufarbeitung bei einem Druck von 1 bar stattfindet.
13. In einer weiteren Ausführungsform der Erfindung ist das Verfahren gemäß einem oder mehreren der Gegenstände 1 bis 12 dadurch gekennzeichnet, dass in einem zusätzlichen Schritt g) ein Feststoff aus der fünften wässrigen Phase isoliert wird.
14. In einer weiteren Ausführungsform der Erfindung ist das Verfahren gemäß einem oder mehreren der Gegenstände 1 bis 13 dadurch gekennzeichnet, dass das Extraktionsmittel in Schritt a) ausgewählt ist aus der Gruppe bestehend aus aliphatischen Lösungsmitteln, aromatischen Lösungsmitteln, Ethern, halogenierten Lösungsmitteln, Estern, Ketonen.
15. In einer weiteren Ausführungsform der Erfindung ist das Verfahren gemäß einem oder mehreren der Gegenstände 1 bis 14 dadurch gekennzeichnet, dass das Extraktionsmittel in Schritt a) ein aliphatisches Lösungsmittel ist und ausgewählt ist aus der Gruppe bestehend aus Pentan, Hexan, Heptan, Octan, Decan, Cyclohexan.
16. In einer weiteren Ausführungsform der Erfindung ist das Verfahren gemäß einem oder mehreren der Gegenstände 1 bis 14 dadurch gekennzeichnet, dass das Extraktionsmittel in Schritt a) ein aromatisches Lösungsmittel ist und ausgewählt ist aus der Gruppe bestehend aus Benzol, Toluol, Xylol.
17. In einer weiteren Ausführungsform der Erfindung ist das Verfahren gemäß einem oder mehreren der Gegenstände 1 bis 14 dadurch gekennzeichnet, dass das Extraktionsmittel in Schritt a) ein Ether ist und dieser ausgewählt ist aus der Gruppe bestehend aus Diethylether, Dipropylether, Dibutylether, Methyl-tert-Butylether.
18. In einer weiteren Ausführungsform der Erfindung ist das Verfahren gemäß einem oder mehreren der Gegenstände 1 bis 14 dadurch gekennzeichnet, dass das Extraktionsmittel in Schritt a) ein halogeniertes Lösungsmittel ist und dieses ausgewählt ist aus der Gruppe bestehend aus Dichlormethan, Chloroform, Tetrachlormethan.
19. In einer weiteren Ausführungsform der Erfindung ist das Verfahren gemäß einem oder mehreren der Gegenstände 1 bis 14 dadurch gekennzeichnet, dass das Extraktionsmittel in Schritt a) ein Ester ist und dieser ausgewählt ist aus der Gruppe bestehend aus Methylacetat, Ethylacetat, Propylacetat, Butylacetat.
20. In einer weiteren Ausführungsform der Erfindung ist das Verfahren gemäß einem oder mehreren der Gegenstände 1 bis 14 dadurch gekennzeichnet, dass das Extraktionsmittel in Schritt a) ein Keton ist und dieses ausgewählt ist aus der Gruppe bestehend aus Diethylketon, Methylisobutylketon, Phenylmethylketon.
21. In einer weiteren Ausführungsform der Erfindung ist das Verfahren gemäß einem oder mehreren der Gegenstände 1 bis 14 dadurch gekennzeichnet, dass das Extraktionsmittel in Schritt a) ausgewählt ist aus der Gruppe bestehend aus Toluol, Methyl-tert-butylether, Methylisobutylketon.
22. In einer weiteren Ausführungsform der Erfindung ist das Verfahren gemäß einem oder mehreren der Gegenstände 1 bis 21 dadurch gekennzeichnet, dass es sich bei den ersten organischen Bestandteile in Schritt a) um eine oder mehrere der Verbindungen ausgewählt aus der Gruppe bestehend aus TAA, Acetonkondensationsprodukten, Aceton-Ammoniak-Kondensationsprodukte handelt.
23. In einer weiteren Ausführungsform der Erfindung ist das Verfahren gemäß einem oder mehreren der Gegenstände 1 bis 22 dadurch gekennzeichnet, dass das Massenverhältnis von eingesetzter wässriger Phase: Extraktionsmittel in Schritt a) 2:1 bis 40:1 beträgt.
24. In einer weiteren Ausführungsform der Erfindung ist das Verfahren gemäß einem oder mehreren der Gegenstände 1 bis 23 dadurch gekennzeichnet, dass das Massenverhältnis von eingesetzter wässriger Phase: Extraktionsmittel in Schritt a) 5:1 bis 20:1 beträgt.
25. In einer weiteren Ausführungsform der Erfindung ist das Verfahren gemäß einem oder mehreren der Gegenstände 1 bis 24 dadurch gekennzeichnet, dass das Massenverhältnis von eingesetzter wässriger Phase: Extraktionsmittel in Schritt a) 10:1 beträgt.
26. In einer weiteren Ausführungsform der Erfindung ist das Verfahren gemäß einem oder mehreren der Gegenstände 1 bis 25 dadurch gekennzeichnet, dass die Extraktionszeit in Schritt a) im Bereich von 0.1 bis 5 Stunden liegt.
27. In einer weiteren Ausführungsform der Erfindung ist das Verfahren gemäß einem oder mehreren der Gegenstände 1 bis 26 dadurch gekennzeichnet, dass die Extraktionszeit in Schritt a) im Bereich von 0.5 bis 2 Stunden liegt.
28. In einer weiteren Ausführungsform der Erfindung ist das Verfahren gemäß einem oder mehreren der Gegenstände 1 bis 27 dadurch gekennzeichnet, dass die Entfernung von zweiten organischen Bestandteilen aus der zweiten wässrigen Phase in Schritt b) bei einem Druck im Bereich von 0.1-10 bar durchgeführt wird.
29. In einer weiteren Ausführungsform der Erfindung ist das Verfahren gemäß einem oder mehreren der Gegenstände 1 bis 28 dadurch gekennzeichnet, dass die Entfernung von zweiten organischen Bestandteilen aus der zweiten wässrigen Phase in Schritt b) bei einem Druck im Bereich von 0.5-5 bar durchgeführt wird.
30. In einer weiteren Ausführungsform der Erfindung ist das Verfahren gemäß einem oder mehreren der Gegenstände 1 bis 29 dadurch gekennzeichnet, dass die Entfernung von zweiten organischen Bestandteilen aus der zweiten wässrigen Phase in Schritt b) bei einem Druck im Bereich von 1-3 bar durchgeführt wird.
31. In einer weiteren Ausführungsform der Erfindung ist das Verfahren gemäß einem oder mehreren der Gegenstände 1 bis 30 dadurch gekennzeichnet, dass die Entfernung von zweiten organischen Bestandteilen aus der zweiten wässrigen Phase in Schritt b) bei einem Druck von 1 bar durchgeführt wird.
32. In einer weiteren Ausführungsform der Erfindung ist das Verfahren gemäß einem oder mehreren der Gegenstände 1 bis 31 dadurch gekennzeichnet, dass die die Entfernung von zweiten organischen Bestandteilen aus der zweiten wässrigen Phase in Schritt b) durch Strippung und/oder Destillation erfolgt und bei einer Destillattemperatur im Bereich von 40-200°C durchgeführt wird.
33. In einer weiteren Ausführungsform der Erfindung ist das Verfahren gemäß einem oder mehreren der Gegenstände 1 bis 32 dadurch gekennzeichnet, dass die Entfernung von zweiten organischen Bestandteilen aus der zweiten wässrigen Phase in Schritt b) durch Strippung und/oder Destillation erfolgt und bei einer Destillattemperatur im Bereich von 60-160°C durchgeführt wird.
34. In einer weiteren Ausführungsform der Erfindung ist das Verfahren gemäß einem oder mehreren der Gegenstände 1 bis 33 dadurch gekennzeichnet, dass die Entfernung von zweiten organischen Bestandteilen aus der zweiten wässrigen Phase in Schritt b) durch Strippung und/oder Destillation erfolgt und bei einer Destillattemperatur im Bereich von 80-120°C durchgeführt wird.
35. In einer weiteren Ausführungsform der Erfindung ist das Verfahren gemäß einem oder mehreren der Gegenstände 1 bis 34 dadurch gekennzeichnet, dass die zweiten organischen Bestandteilen in Schritt b) ausgewählt sind aus der Gruppe bestehend aus Ammoniak, Aceton, Mesityloxid, Diacetonalkohol, Diacetonamin, Acetonin, TMDH-Pyridin, Pentan, Hexan, Heptan, Cyclohexan; Benzol; Diethylether, Dipropylether, Methyl-tert-Butylether; Dichlormethan, Chloroform, Tetrachlormethan; Methylacetat, Ethylacetat, Isopropylacetat, Toluol, Xylol..
36. In einer weiteren Ausführungsform der Erfindung ist das Verfahren gemäß einem oder mehreren der Gegenstände 1 bis 35 dadurch gekennzeichnet, dass die Entfernung von Wasser aus der dritten wässrigen Phase in Schritt c) durch Destillation erfolgt und der Druck dabei im Bereich 0.1-10 bar liegt.
37. In einer weiteren Ausführungsform der Erfindung ist das Verfahren gemäß einem oder mehreren der Gegenstände 1 bis 36 dadurch gekennzeichnet, dass die Entfernung von Wasser aus der dritten wässrigen Phase in Schritt c) durch Destillation erfolgt und der Druck dabei im Bereich 0.5-5 bar liegt.
38. In einer weiteren Ausführungsform der Erfindung ist das Verfahren gemäß einem oder mehreren der Gegenstände 1 bis 37 dadurch gekennzeichnet, dass die Entfernung von Wasser aus der dritten wässrigen Phase in Schritt c) durch Destillation erfolgt und der Druck dabei im Bereich 1-3 bar liegt.
39. In einer weiteren Ausführungsform der Erfindung ist das Verfahren gemäß einem oder mehreren der Gegenstände 1 bis 38 dadurch gekennzeichnet, dass die Entfernung von Wasser aus der dritten wässrigen Phase in Schritt c) durch Destillation erfolgt und der Druck dabei 1 bar beträgt.
40. In einer weiteren Ausführungsform der Erfindung ist das Verfahren gemäß einem oder mehreren der Gegenstände 1 bis 39 dadurch gekennzeichnet, dass die Entfernung von Wasser aus der dritten wässrigen Phase in Schritt c) durch Destillation erfolgt und die Destillattemperatur im Bereich von 40-200°C liegt.
41. In einer weiteren Ausführungsform der Erfindung ist das Verfahren gemäß einem oder mehreren der Gegenstände 1 bis 40 dadurch gekennzeichnet, dass die Entfernung von Wasser aus der dritten wässrigen Phase in Schritt c) durch Destillation erfolgt und die Destillattemperatur im Bereich von 60-160°C liegt.
42. In einer weiteren Ausführungsform der Erfindung ist das Verfahren gemäß einem oder mehreren der Gegenstände 1 bis 41 dadurch gekennzeichnet, dass die Entfernung von Wasser aus der dritten wässrigen Phase in Schritt c) durch Destillation erfolgt und die Destillattemperatur im Bereich von 80-120°C liegt.
43. In einer weiteren Ausführungsform der Erfindung ist das Verfahren gemäß einem oder mehreren der Gegenstände 1 bis 42 dadurch gekennzeichnet, dass die Entfernung von dritten organischen Bestandteilen aus der vierten wässrigen Phase und Aufhellung der vierten wässrigen Phase in Schritt d) durch Adsorption mit Hilfe eines Adsorptionsmittels erfolgt und das Adsorptionsmittel ausgewählt ist aus der Gruppe bestehend aus Aktivkohle, Zeolithe, Kieselgel.
44. In einer weiteren Ausführungsform der Erfindung ist das Verfahren gemäß einem oder mehreren der Gegenstände 1 bis 43 dadurch gekennzeichnet, dass die Entfernung von dritten organischen Bestandteilen aus der vierten wässrigen Phase und Aufhellung der vierten wässrigen Phase in Schritt d) durch Adsorption mit Hilfe eines Adsorptionsmittels in Schritt d) durch Adsorption mit Hilfe eines Adsorptionsmittels erfolgt und das Adsorptionsmittel Aktivkohle ist.
45. In einer weiteren Ausführungsform der Erfindung ist das Verfahren gemäß einem oder mehreren der Gegenstände 1 bis 44 dadurch gekennzeichnet, dass die Entfernung von dritten organischen Bestandteilen aus der vierten wässrigen Phase und Aufhellung der vierten wässrigen Phase in Schritt d) durch Adsorption mit Hilfe eines Adsorptionsmittels und die Menge an eingesetztem Adsorptionsmittel bei 0.01 - 10% (Massenprozent bezogen auf das Gewicht der vierten wässrigen Phase) liegt.
46. In einer weiteren Ausführungsform der Erfindung ist das Verfahren gemäß einem oder mehreren der Gegenstände 1 bis 45 dadurch gekennzeichnet, dass die Entfernung von dritten organischen Bestandteilen aus der vierten wässrigen Phase und Aufhellung der vierten wässrigen Phase in Schritt d) durch Adsorption mit Hilfe eines Adsorptionsmittels und die Menge an eingesetztem Adsorptionsmittel bei 0.1 - 5% (Massenprozent bezogen auf das Gewicht der vierten wässrigen Phase) liegt.
47. In einer weiteren Ausführungsform der Erfindung ist das Verfahren gemäß einem oder mehreren der Gegenstände 1 bis 46 dadurch gekennzeichnet, dass die Entfernung von dritten organischen Bestandteilen aus der vierten wässrigen Phase und Aufhellung der vierten wässrigen Phase in Schritt d) durch Adsorption mit Hilfe eines Adsorptionsmittels und die Menge an eingesetztem Adsorptionsmittel bei 0.2 - 1% (Massenprozent bezogen auf das Gewicht der vierten wässrigen Phase) liegt.
48. In einer weiteren Ausführungsform der Erfindung ist das Verfahren gemäß einem oder mehreren der Gegenstände 1 bis 47 dadurch gekennzeichnet, dass die Entfernung von dritten organischen Bestandteilen aus der salzhaltigen, wässrigen Phase und Aufhellung der vierten wässrigen Phase in Schritt d) bei einer Temperatur im Bereich von 0-150°C erfolgt.
49. In einer weiteren Ausführungsform der Erfindung ist das Verfahren gemäß einem oder mehreren der Gegenstände 1 bis 48 dadurch gekennzeichnet, dass die Entfernung von dritten organischen Bestandteilen aus der vierten wässrigen Phase und Aufhellung der vierten wässrigen Phase in Schritt d) bei einer Temperatur im Bereich von 0-100°C erfolgt.
50. In einer weiteren Ausführungsform der Erfindung ist das Verfahren gemäß einem oder mehreren der Gegenstände 1 bis 49 dadurch gekennzeichnet, dass die Entfernung von dritten organischen Bestandteilen aus der vierten wässrigen Phase und Aufhellung der vierten wässrigen Phase in Schritt d) bei einer Temperatur im Bereich von 10-50°C erfolgt.
51. In einer weiteren Ausführungsform der Erfindung ist das Verfahren gemäß einem oder mehreren der Gegenstände 1 bis 50 dadurch gekennzeichnet, dass die Entfernung von dritten organischen Bestandteilen aus der vierten wässrigen Phase und Aufhellung der vierten wässrigen Phase in Schritt d) bei einem Druck im Bereich von 1-10 bar erfolgt.
52. In einer weiteren Ausführungsform der Erfindung ist das Verfahren gemäß einem oder mehreren der Gegenstände 1 bis 51 dadurch gekennzeichnet, dass die Entfernung von dritten organischen Bestandteilen aus der vierten wässrigen Phase und Aufhellung der vierten wässrigen Phase in Schritt d) bei einem Druck im Bereich von 1-5 bar erfolgt.
53. In einer weiteren Ausführungsform der Erfindung ist das Verfahren gemäß einem oder mehreren der Gegenstände 1 bis 52 dadurch gekennzeichnet, dass die Entfernung von dritten organischen Bestandteilen aus der vierten wässrigen Phase und Aufhellung der vierten wässrigen Phase in Schritt d) bei einem Druck im Bereich von 1-3 bar erfolgt.
54. In einer weiteren Ausführungsform der Erfindung ist das Verfahren gemäß einem oder mehreren der Gegenstände 1 bis 53 dadurch gekennzeichnet, dass es sich bei dem in Schritt e) verwendeten Hilfsstoff um eine Base handelt.
55. In einer weiteren Ausführungsform der Erfindung ist das Verfahren gemäß einem oder mehreren der Gegenstände 1 bis 54 dadurch gekennzeichnet, dass es sich bei dem in Schritt e) verwendeten Hilfsstoff um eine Base handelt, wobei die Base ausgewählt ist aus der Gruppe bestehend aus Natriumhydroxid, Kaliumhydroxid, Natriumcarbonat, Kaliumcarbonat, Natriumhydrogencarbonat, Kaliumhydrogencarbonat, Calciumhydroxid, Calciumcarbonat.
56. In einer weiteren Ausführungsform der Erfindung ist das Verfahren gemäß einem oder mehreren der Gegenstände 1 bis 53 dadurch gekennzeichnet, dass es sich bei dem in Schritt e) verwendeten Hilfsstoff um eine Säure handelt.
57. In einer weiteren Ausführungsform der Erfindung ist das Verfahren gemäß einem oder mehreren der Gegenstände 1 bis 53 und 56 dadurch gekennzeichnet, dass es sich bei dem in Schritt e) verwendeten Hilfsstoff um eine Säure handelt, wobei die Säure ausgewählt ist aus der Gruppe bestehend aus Salzsäure, Schwefelsäure, Salpetersäure, Phosphorsäure, organische Säuren.
58. In einer weiteren Ausführungsform der Erfindung ist das Verfahren gemäß einem oder mehreren der Gegenstände 1 bis 53 und 56 bis 57 dadurch gekennzeichnet, dass es sich bei dem in Schritt e) verwendeten Hilfsstoff um eine Säure handelt, wobei die Säure ausgewählt ist aus der Gruppe bestehend aus Salzsäure, Schwefelsäure, Salpetersäure, Phosphorsäure, organische Säuren, und wobei es sich bei den organischen Säuren um Essigsäure oder Benzoesäure handelt.
59. In einer weiteren Ausführungsform der Erfindung ist das Verfahren gemäß einem oder mehreren der Gegenstände 1 bis 58 dadurch gekennzeichnet, dass der pH-Wert der wässrigen Phase nach Einstellung des pH-Werts in Schritt e) im Bereich pH 5 bis pH 9 liegt.
60. In einer weiteren Ausführungsform der Erfindung ist das Verfahren gemäß einem oder mehreren der Gegenstände 1 bis 59 dadurch gekennzeichnet, dass der pH-Wert der wässrigen Phase nach Einstellung des pH-Werts in Schritt e) im Bereich pH 6 bis pH 8 liegt.
61. In einer weiteren Ausführungsform der Erfindung ist das Verfahren gemäß einem oder mehreren der Gegenstände 1 bis 60 dadurch gekennzeichnet, dass die Einstellung des pH-Werts in Schritt e) bei einer Temperatur im Bereich von 0-150°C erfolgt.
62. In einer weiteren Ausführungsform der Erfindung ist das Verfahren gemäß einem oder mehreren der Gegenstände 1 bis 61 dadurch gekennzeichnet, dass die Einstellung des pH-Werts in Schritt e) bei einer Temperatur im Bereich von 10-100°C erfolgt.
63. In einer weiteren Ausführungsform der Erfindung ist das Verfahren gemäß einem oder mehreren der Gegenstände 1 bis 62 dadurch gekennzeichnet, dass die Einstellung des pH-Werts in Schritt e) bei einer Temperatur im Bereich von 20-80°C erfolgt.
64. In einer weiteren Ausführungsform der Erfindung ist das Verfahren gemäß einem oder mehreren der Gegenstände 1 bis 63 dadurch gekennzeichnet, dass die Einstellung des pH-Werts in Schritt e) bei einem Druck im Bereich von 1-10 bar erfolgt.
65. In einer weiteren Ausführungsform der Erfindung ist das Verfahren gemäß einem oder mehreren der Gegenstände 1 bis 64 dadurch gekennzeichnet, dass die Einstellung des pH-Werts in Schritt e) bei einem Druck im Bereich von 1-6 bar erfolgt.
66. In einer weiteren Ausführungsform der Erfindung ist das Verfahren gemäß einem oder mehreren der Gegenstände 1 bis 65 dadurch gekennzeichnet, dass die Einstellung des pH-Werts in Schritt e) bei einem Druck im Bereich von 1-3 bar erfolgt.
67. In einer weiteren Ausführungsform der Erfindung ist das Verfahren gemäß einem oder mehreren der Gegenstände 1 bis 66 dadurch gekennzeichnet, dass in einem zusätzlichen Schritt g) ein Feststoff aus der fünften wässrigen Phase isoliert wird.
68. In einer weiteren Ausführungsform der Erfindung ist das Verfahren gemäß einem oder mehreren der Gegenstände 1 bis 67 dadurch gekennzeichnet, dass in einem zusätzlichen Schritt g) ein Feststoff aus der fünften wässrigen Phase isoliert wird und dabei der Feststoff durch eine Kristallisation, durch Temperaturerniedrigung, durch weitere Entfernung von Lösungsmittel oder durch Kombination dieser Schritte isoliert wird.
69. In einer weiteren Ausführungsform der Erfindung ist das Verfahren gemäß einem oder mehreren der Gegenstände 1 bis 68 dadurch gekennzeichnet, dass es eingesetzt wird zur Behandlung von eingesetzten wässrigen Phasen, welche 0.1 - 49.9% anorganische Salze und 0.1 - 49.9% Base umfassen und einen pH-Wert von größer oder gleich pH 7 aufweisen.
70. In einer weiteren Ausführungsform der Erfindung ist das Verfahren gemäß einem oder mehreren der Gegenstände 1 bis 69 dadurch gekennzeichnet, dass es eingesetzt wird zur Behandlung von eingesetzten wässrigen Phasen, welche 1 - 29.9% anorganische Salze, 1 - 30% Base, 0.1 - 20% Aceton, 0.1 - 20% TAA umfassen und einen pH-Wert von 7 bis 14 aufweisen.
71. In einer weiteren Ausführungsform der Erfindung ist das Verfahren gemäß einem oder mehreren der Gegenstände 1 bis 70 dadurch gekennzeichnet, dass es eingesetzt wird zur Behandlung von eingesetzten wässrigen Phasen, welche 1 - 29.9% anorganische Salze, 1 - 30% Base, 0.1 - 20% Aceton, 0.1 - 20% TAA umfassen und einen pH-Wert von 10 bis 14 aufweisen.
72. In einer weiteren Ausführungsform der Erfindung ist das Verfahren gemäß einem oder mehreren der Gegenstände 1 bis 71 dadurch gekennzeichnet, dass es eingesetzt wird zur Behandlung von eingesetzten wässrigen Phasen, welche 5 - 20% anorganische Salze, 5 - 20% Base, 0.1 - 10% Aceton, 0.1 - 10% TAA, 0.1 - 10% Aceton-Kondensationsprodukte, 0.1 - 10% weitere organische Komponenten umfassen und einen pH-Wert von 12 bis 14 aufweisen.
73. In einer weiteren Ausführungsform der Erfindung ist das Verfahren gemäß einem oder mehreren der Gegenstände 1 bis 72 dadurch gekennzeichnet, dass es eingesetzt wird zur Behandlung von eingesetzten wässrigen Phasen, welche 5 - 20% anorganische Salze, 5 - 20% Base, 0.1 - 5% Aceton, 0.1 - 3% TAA, 0.1 - 3% Aceton-Kondensationsprodukte, 0.1 - 3% weitere organische Komponenten umfassen und einen pH-Wert von 12 bis 14 aufweisen.

### Detaillierte Beschreibung der Erfindung

Das Verfahren ist geeignet zur Behandlung von wässrigen Lösungen, welche bei der Herstellung von Triacertonamin anfallen, und welche insbesondere einen oder mehrere der Bestandteile ausgewählt aus der Gruppe anorganische Salze, Base, Aceton TAA, Aceton-Kondensationsprodukte, weitere organische Komponenten enthalten.

"Anorganische Salze" bedeutet dabei insbesondere NaCl, KCl, NaNO₃, KNO₃, Na₂SO₄, K₂SO₄, NaHCO₃, KHCO₃.
"Base" bedeutet dabei insbesondere NaOH, KOH; Na₂CO₃, K₂CO₃.
"Aceton-Kondensationsprodukte" bedeutet dabei insbesondere Mesityloxid, Diacetonalkohol, Diacetonamin, TMDH-Pyridin, Acetonin, Phoron.
"Weitere organische Komponenten" bedeutet dabei insbesondere Ammoniak.
Alle "%"-Angaben sind, soweit nicht anders angegeben, als Massenprozent zu verstehen.

Die Lösungen, die sich bei der TAA-Herstellung ergeben und zur Behandlung welcher das erfindungsgemäße Verfahren insbesondere geeignet ist und wozu es eingesetzt werden kann, sind wässrige Lösungen, welche 0.1 - 49.9% anorganische Salze und 0.1 - 49.9% Base umfassen und einen pH-Wert von größer oder gleich pH 7 aufweisen. Bevorzugt ist das erfindungsgemäße Verfahren geeignet und wird eingesetzt zur Behandlung wässriger Lösungen, die 1 - 39.9% anorganische Salze, 1 - 20% Base, 0.1 - 20% Aceton, 0.1 - 20% TAA umfassen und einen pH-Wert von 7 bis 14 aufweisen. Besonders bevorzugt ist das erfindungsgemäße Verfahren geeignet und wird eingesetzt zur Behandlung wässriger Lösungen, die 1 - 29.9% anorganische Salze, 1 - 30% Base, 0.1 - 20% Aceton, 0.1 - 20% TAA umfassen und einen pH-Wert von 10 bis 14 aufweisen. Ganz besonders bevorzugt ist das erfindungsgemäße Verfahren geeignet und wird eingesetzt zur Behandlung wässriger Lösungen, die 5 - 20% anorganische Salze, 5 - 20% Base, 0.1 - 10% Aceton, 0.1 - 10% TAA, 0.1 - 10% Aceton-Kondensationsprodukte, 0.1 - 10% weitere organische Komponenten umfassen und einen pH-Wert von 12 bis 14 aufweisen. Am bevorzugtesten ist das erfindungsgemäße Verfahren geeignet und wird eingesetzt zur Behandlung wässriger Lösungen, die 5 - 20% anorganische Salze, 5 - 20% Base, 0.1 - 5% Aceton, 0.1 - 3% TAA, 0.1 - 3% Aceton-Kondensationsprodukte, 0.1 - 3% weitere organische Komponenten umfassen und einen pH-Wert von 12 bis 14 aufweisen.

Im ersten Schritt [Schritt a)] des erfindungsgemäßen Verfahrens erfolgt die Entfernung von ersten organischen Bestandteilen aus einer eingesetzten wässrigen Phase, bevorzugt dem Abwasser aus der TAA-Herstellung, durch Extraktion mit einem geeigneten Extraktionsmittel, wobei eine zweite wässrige Phase und ein das Extraktionsmittel enthaltendes Extrakt erhalten werden. Das Extraktionsmittel ist bevorzugt mit Wasser nicht mischbar ist.
Es ist unter dem Begriff "eingesetzte wässrige Phase" eine wässrige Lösung, welche bei der Herstellung von Triacertonamin anfällt, und welche bevorzugt einen oder mehrere der Bestandteile ausgewählt aus der Gruppe anorganische Salze, Base, Aceton TAA, Aceton-Kondensationsprodukte, weitere organische Komponenten enthält, zu verstehen.
Die Extraktion besteht aus dem Zusammenbringen der Wasserphase mit dem Extraktionsmittel unter Durchmischung, gefolgt von einer Trennung der beiden Phasen. Die Extraktion kann kontinuierlich oder im Batchbetrieb durchgeführt werden. Die Extraktion kann in jedem dafür geeigneten Behälter durchgeführt werden (z.B. Rührkessel, kontinuierlicher Rührkessel). Die nötige Phasentrennung kann ebenfalls in jedem dafür geeigneten Behälter durchgeführt werden (z.B. Rührkessel, nicht rührbares Abscheidegefäß, kontinuierlicher Abscheider).
Die Temperatur, bei welcher Schritt a) durchgeführt wird, ist grundsätzlich nicht beschränkt. Die bevorzugte Temperatur liegt im Bereich 0-100°C, besonders bevorzugt im Bereich 10-60°C, ganz besonders bevorzugt im Bereich 20-40°C. Der Druck, bei welchem Schritt a) durchgeführt wird, ist ebenfalls nicht beschränkt. Der bevorzugte Druck liegt im Bereich 1-10 bar, besonders bevorzugt im Bereich 1-6 bar, ganz besonders bevorzugt im Bereich 1-3 bar. Bevorzugt ist eine Extraktion bei niedriger Temperatur sowie bei Normaldruck von 1 bar, da diese Bedingungen zu einer besseren Phasentrennung führen und apparativ einfacher zu realisieren sind.
Zur Extraktion geeignet ist prinzipiell jedes mit Wasser nicht mischbare Extraktionsmittel. Bevorzugt eingesetzt werden solche Extraktionsmittel, in denen die zu extrahierenden Bestandteile eine hohe Löslichkeit besitzen und welche unter den gegebenen Bedingungen stabil sind. Insbesondere werden Extraktionsmittel eingesetzt, welche sich in Schritt c) leicht von Wasser trennen lassen. Bevorzugt kann ein Extraktionsmittel eingesetzt werden, welches ausgewählt ist aus der Gruppe bestehend aus aliphatischen Lösungsmitteln, aromatischen Lösungsmitteln, Ethern, halogenierten Lösungsmitteln, Estern, Ketonen. Das aliphatisches Lösungsmittel wird dabei besonders bevorzugt ausgewählt aus der Gruppe bestehend aus Pentan, Hexan, Heptan, Octan, Decan, Cyclohexan. Das aromatische Lösungsmittel wird dabei besonders bevorzugt ausgewählt aus der Gruppe bestehend aus Benzol, Toluol, Xylol. Der Ether wird dabei besonders bevorzugt ausgewählt aus der Gruppe bestehend aus Diethylether, Dipropylether, Dibutylether, Methyl-tert-Butylether. Das halogenierte Lösungsmittel wird dabei besonders bevorzugt ausgewählt aus der Gruppe bestehend aus Dichlormethan, Chloroform, Tetrachlormethan. Der Ester wird dabei besonders bevorzugt ausgewählt aus der Gruppe bestehend aus Methylacetat, Ethylacetat, Propylacetat, Butylacetat. Das Keton wird dabei besonders bevorzugt ausgewählt aus der Gruppe bestehend aus Diethylketon, Methylisobutylketon, Phenylmethylketon. Ganz besonders bevorzugt wird das zur Extraktion eingesetzte Lösungsmittel ausgewählt aus der Gruppe bestehend aus Toluol, Methyl-tert-butylether, Methylisobutylketon.

"Erste organische Bestandteile" bezeichnet dabei insbesondere TAA und Acetonkondensationsprodukte und/oder Aceton-Ammoniak-Kondensationsprodukte.

Das bevorzugte Massenverhältnis von eingesetzter wässriger Phase: Extraktionsmittel beträgt 2:1 bis 40:1, besonders bevorzugt 5:1 bis 20:1, ganz besonders bevorzugt 10:1.

Die Extraktionszeit liegt im Bereich 0.1 bis 5 Stunden, bevorzugt im Bereich 0.5 bis 2 Stunden.

Wird die eingesetzte wässrige Phase dem Schritt a) unterworfen, resultieren demnach eine zweite wässrige Phase und ein das Extraktionsmittel enthaltendes Extrakt.

In einem zweiten Schritt [Schritt b)] erfolgt die Entfernung von zweiten organischen Bestandteilen aus der zweiten wässrigen Phase, wobei eine dritte wässrige Phase erhalten wird. Die zweite wässrige Phase ist die wässrige Phase, welche in Schritt a) erhalten wird. Der Begriff "zweite organische Bestandteile" bezeichnet leicht flüchtige organische Bestandteile. Unter "leicht flüchtigen organischen Bestandteilen" versteht man insbesondere dabei organische Komponenten, deren Siedepunkt bei Normaldruck (1 bar) unter dem Siedepunkt von Wasser liegt, oder die ein Azeotrop mit Wasser ausbilden, dessen Siedepunkt bei Normaldruck (1 bar) unter dem Siedepunkt von Wasser liegt. Insbesondere sind dies Ammoniak, Aceton, Mesityloxid, Diacetonalkohol, Diacetonamin, Acetonin, TMDH-Pyridin. Darunter kann auch das in a) verwendete Lösungsmittel fallen, wenn dessen Siedepunkt bei Normaldruck (1 bar) unter dem Siedepunkt von Wasser liegt, oder es ein Azeotrop mit Wasser ausbilden, dessen Siedepunkt bei Normaldruck (1 bar) unter dem Siedepunkt von Wasser liegt. Dies ist insbesondere der Fall für Pentan, Hexan, Heptan, Cyclohexan; Benzol; Diethylether, Dipropylether, Methyl-tert-Butylether; Dichlormethan, Chloroform, Tetrachlormethan; Methylacetat, Ethylacetat.

Unter "leicht flüchtigen organischen Bestandteilen" versteht man auch Toluol, Xylol, Octan, Decan; Dibutylether; n-Propylacetat, Butylacetat; Diethylketon, Methylisobutylketon, Phenylmethylketon.

Die Entfernung von leicht flüchtigen organischen Bestandteilen erfolgt durch Destillation und/oder Strippung.
Unter Strippung versteht man dabei die Überführung von Stoffen aus einer Flüssigphase in die Gasphase, in dem die Flüssigphase mit einem Gas im Gegenstrom in Kontakt gebracht wird. Eine Strippung kann an einer für die Trennaufgabe geeigneten Kolonne erfolgen (z.B. Bodenkolonnen, Füllkörperkolonnen oder Kolonnen mit strukturierten Packungen).
Eine Destillation kann diskontinuierlich oder kontinuierlich erfolgen. Dabei wird ein geeigneter Behälter (z.B. Doppelmantelreaktor, Reaktor mit externem Wärmetauscher, Reaktor mit innenliegendem Wärmetauscher) sowie eine für die Trennaufgabe geeignete Destillationskolonne (z.B. Bodenkolonnen, Füllkörperkolonnen oder Kolonnen mit strukturierten Packungen) verwendet.
Durch die Strippung und/oder die Destillation wird die organische Belastung der jeweiligen wässrigen Phase gesenkt. Bevorzugt wird sowohl die Destillation als auch die Strippung derart durchgeführt, dass der TOC (total organic carbon) des Sumpfproduktes im Bereich von 20 - 5000 ppm liegt, besonders bevorzugt im Bereich von 50 - 2000 ppm, ganz besonders bevorzugt im Bereich von 100 - 1000 ppm.
Der Druck, bei welchem Schritt b) durchgeführt wird, ist ebenfalls nicht beschränkt. Der bevorzugte Druck liegt im Bereich 0.1-10 bar, besonders bevorzugt 0.5-5 bar, ganz besonders bevorzugt 1-3 bar. Besonders bevorzugt ist eine Destillation unter Normaldruck (1 bar). Die bevorzugte Destillattemperatur liegt dabei im Bereich von 40-200°C, besonders bevorzugt im Bereich von 60-160°C, ganz besonders bevorzugt im Bereich von 80-120°C.
Bei Durchführung des Schrittes b) mit der zweiten wässrigen Phase wird eine dritte wässrige Phase erhalten.

In einem dritten Schritt [Schritt c)] erfolgt die Entfernung von Wasser aus der dritten wässrigen Phase, wobei eine vierte wässrige Phase und eine abgetrennte wässrige Phase erhalten werden, wobei die abgetrennte wässrige Phase das aus der dritten Phase entfernte Wasser umfasst. Dabei wird die Entfernung von Wasser aus der dritten Phase durch Destillation durchgeführt. In diesem Fall bezeichnet der Begriff "abgetrennte wässrige Phase"

den erhaltenen Destillatstrom. Die Destillation kann diskontinuierlich oder kontinuierlich erfolgen. Wird eine Destillation durchgeführt, wird ein geeigneter Behälter (z.B. Doppelmantelreaktor, Reaktor mit externem Wärmetauscher, Reaktor mit innenliegendem Wärmetauscher) sowie eine für die Trennaufgabe geeignete Destillationskolonne (z.B. Bodenkolonnen, Füllkörperkolonnen oder Kolonnen mit strukturierten Packungen) verwendet. Dabei wird bevorzugt ein Destillatstrom erhalten, der neben Wasser nur sehr geringe Mengen an organischen Verunreinigungen enthält. Bevorzugt ist ein Kohlenstoffbelastung von TOC < 1000 ppm, besonders bevorzugt von TOC < 250 ppm, ganz besonders bevorzugt von TOC < 100 ppm. Die Destillation kann dabei bei Normaldruck oder unter vermindertem oder erhöhtem Druck stattfinden. Der bevorzugte Druck liegt im Bereich 0.1-10 bar, besonders bevorzugt 0.5-5 bar, ganz besonders bevorzugt 1-3 bar. Besonders bevorzugt ist eine Destillation unter Normaldruck. Die bevorzugte Destillattemperatur liegt dabei im Bereich von 40-200°C, besonders bevorzugt im Bereich von 60-160°C, ganz besonders bevorzugt 80-120°C.
Die Entfernung von Wasser aus der dritten wässrigen Phase erfolgt zur Einstellung einer gewünschten Konzentration in der vierten wässrigen Phase. Die Konzentration in der vierten wässrigen Phase an Salzen, insbesondere anorganischen Salzen, nach der Abtrennung von Wasser liegt bei 5-75%, bevorzugt bei 10-70%, besonders bevorzugt bei 20-65%, ganz besonders bevorzugt bei 30-60%, am bervorzugtesten bei 40-60%.

In einer weiteren Ausführungsform können die Schritte b) und c) in direkter Abfolge, das heißt in einem Behälter, durchgeführt werden. Dabei werden durch fraktionierte Destillation zunächst die leicht flüchtigen organischen Bestandteile als erste Destillatfraktion abgetrennt [entspricht Schritt b)], anschließend erfolgt die Entfernung von Wasser als zweite Destillatfraktion [entspricht Schritt c)]. Dabei werden bevorzugt die für die Schritte b) und c) genannten Parameterbereiche und Ausführungsformen verwendet.

In einem vierten Schritt [Schritt d)] erfolgt die Entfernung von dritten organischen Bestandteilen aus der vierten wässrigen Phase und Aufhellung der vierten wässrigen Phase, wobei eine fünfte wässrige Phase erhalten wird. Die dritten organischen Bestandteile sind typischerweise verbliebene nicht flüchtige organische Bestandteile. Unter nicht flüchtigen organischen Bestandteilen versteht man organischen Komponenten, welche bei den in c) verwendeten Bedingungen in der wässrigen Phase verbleiben, z.B. solche Komponenten, deren Siedepunkt unter Normaldruck über dem von Wasser liegt und die dementsprechend bei einer Entfernung von Wasser in c) durch Destillation in der vierten wässrigen Phase verbleiben. Insbesondere sind dies Triacetonamin und Triacetonamin-Hochsieder. In einer bevorzugten Ausführungsform sind erste und dritte organische Bestandteile chemisch gleich.
Die Entfernung von dritten organischen Bestandteilen aus der vierten wässrigen Phase und Aufhellung der vierten wässrigen Phase erfolgt durch Adsorption, bevorzugt mit einem Adsorptionsmittel.

Die Behandlung mit einem Adsorptionsmittel kann sowohl kontinuierlich oder im Batchbetrieb durchgeführt werden. Dabei kann jeder geeignete Behälter verwendet werden, um das Adsorptionsmittel mit der vierten wässrigen Phase aus Schritt c) in Kontakt zu bringen (z.B. Rührkessel, Schlaufenreaktor, Strömungsrohr). Es kann jedes geeignete Adsorptionsmittel verwendet werden. Bevorzugt ist das Adsorptionsmittel ausgewählt aus der Gruppe bestehend aus Aktivkohle, Zeolithe, Kieselgel. Besonders bevorzugt wird als Adsorptionsmittel Aktivkohle eingesetzt.
Die Adsorptionsmittel können insbesondere als Pulver oder als Granulat eingesetzt werden. Dabei kann der Kontakt zwischen Adsorbens und wässriger Lösung entweder durch direktes Vermischen oder mittels Durchströmung eines Adsorbens-gefüllten Behälters erfolgen.
Die bevorzugte Menge an eingesetztem Adsorptionsmittel liegt bei 0.01 - 10% (bezogen auf das Gewicht der wässrigen Phase), besonders bevorzugt bei 0.1 - 5%, ganz besonders bevorzugt bei 0.2 - 1%.
Die Temperatur, bei welchem Schritt d) durchgeführt wird, ist prinzipiell nicht beschränkt. Bevorzugt wird Schritt d) bei einer Temperatur im Bereich von 0-150°C, besonders bevorzugt bei einer Temperatur im Bereich von 0-100°C, ganz besonders bevorzugt im Bereich von 10-50°C durchgeführt. Der Druck, bei welchem Schritt d) durchgeführt wird, ist prinzipiell nicht beschränkt. Bevorzugt wird Schritt d) bei einem Druck im Bereich von 1-10 bar, besonders bevorzugt bei einem Druck im Bereich von 1-5 bar, ganz besonders bevorzugt im Bereich 1-3 bar durchgeführt.
Die Entfernung des Adsorptionsmittels nach der Behandlung kann auf jede geeignete Art und Weise erfolgen. So kann die Abtrennung eines pulverförmigen Adsorbens z.B. durch Filtration oder Zentrifugation erfolgen. Bei Verwendung eines Adsorbens-Granulates kann dieses durch geeignete technische Maßnahmen zurückgehalten werden (z.B. Siebplatten).
Nach der Entfernung des Adsorptionsmittel wird eine Lösung erhalten, die neben Wasser und den gelösten anorganischen Salzen nur sehr geringe Mengen an organischen Verunreinigungen enthält. Bevorzugt ist ein Kohlenstoffbelastung von TOC < 1000 ppm, besonders bevorzugt ist ein TOC < 250 ppm, ganz besonders bevorzugt ein TOC < 100 ppm Nach der Entfernung des Adsorptionsmittels wird eine Lösung erhalten, die nur eine geringe Eigenfärbung aufweist. Bevorzugt ist eine Farbzahl APHA < 100, besonders bevorzugt APHA < 50, ganz besonders bevorzugt APHA < 10.

In einem fünften Schritt [Schritt e)] erfolgt die Einstellung des pH-Wertes der eingesetzten, zweiten, dritten, vierten und/oder fünften wässrigen Phase. Dies ist nötig, da der erhaltene Abwasserstrom einen pH-Wert von über pH 7, bevorzugt im Bereich von pH 7 bis 14, besonders bevorzugt im Bereich von pH 10 bis 14, ganz besonders bevorzugt im Bereich von pH 12 bis 14 aufweist. Dabei beträgt der bevorzugte pH-Wert nach der Einstellung des pH-Wertes 5-9, bevorzugt 6-8.
"Einstellung des pH-Wertes der eingesetzten, zweiten, dritten, vierten und/oder fünften wässrigen Lösung" umfasst dabei alle möglichen Kombinationen der Schritte. Es umfasst beispielsweise die folgenden nicht limizierenden Kombinationen: Es umfasst die Einstellung des pH-Werts von nur der eingesetzten Lösung, nur der zweiten wässrigen Phase, nur der dritten wässrigen Phase, nur der vierten wässrigen Phase, nur der fünften wässrigen Phase. Es umfasst auch die Einstellung des pH-Werts der eingesetzten wässrigen Phase und der zweiten wässrigen Phase. Es umfasst auch die Einstellung des pH-Werts der eingesetzten wässrigen Phase, der zweiten wässrigen Phase und der dritten wässrigen Phase. Es umfasst auch die Einstellung des pH-Werts der eingesetzten wässrigen Phase, der zweiten wässrigen Phase, der dritten wässrigen Phase und der vierten wässrigen Phase. Es umfasst auch die Einstellung des pH-Werts der eingesetzten wässrigen Phase, der zweiten wässrigen Phase, der dritten wässrigen Phase, der vierten wässrigen Phase und der fünften wässrigen Phase. Es umfasst auch die Einstellung des pH-Werts der eingesetzten wässrigen Phase, der dritten wässrigen Phase, der vierten wässrigen Phase und der fünften wässrigen Phase. Es umfasst auch die Einstellung des pH-Werts der eingesetzten wässrigen Phase, der vierten wässrigen Phase und der fünften wässrigen Phase. Es umfasst auch die Einstellung des pH-Werts der eingesetzten wässrigen Phase und der fünften wässrigen Phase. Es umfasst auch die Einstellung des pH-Werts der eingesetzten wässrigen Phase, der zweiten wässrigen Phase, der vierten wässrigen Phase und der fünften wässrigen Phase. Es umfasst auch die Einstellung des pH-Werts der eingesetzten wässrigen Phase, der zweiten wässrigen Phase und der fünften wässrigen Phase.

Es umfasst auch die Einstellung des pH-Werts der eingesetzten wässrigen Phase und der zweiten wässrigen Phase. Es umfasst auch die Einstellung des pH-Werts der eingesetzten wässrigen Phase, der zweiten wässrigen Phase, der dritten wässrigen Phase und der fünften wässrigen Phase. Es umfasst auch die Einstellung des pH-Werts der eingesetzten wässrigen Phase, der zweiten wässrigen Phase, der dritten wässrigen Phase. Es umfasst auch die Einstellung des pH-Werts der eingesetzten wässrigen Phase, der zweiten wässrigen Phase, der vierten wässrigen Phase und der fünften wässrigen Phase. Es umfasst auch die Einstellung des pH-Werts der eingesetzten wässrigen Phase, der vierten wässrigen Phase und der fünften wässrigen Phase.

Zur Einstellung des pH-Werts ist jede handelsübliche Säure oder Base anwendbar. Die Säure wird bevorzugt ausgewählt aus der Gruppe bestehend aus Salzsäure, Schwefelsäure, Salpetersäure, Phosphorsäure, organische Säuren (Essigsäure, Benzoesäure). Bevorzugt ist, dass es sich bei dem in Schritt e) verwendeten Hilfsstoff um eine Base handelt. Die Base wird bevorzugt ausgewählt aus der Gruppe bestehend aus Natriumhydroxid, Kaliumhydroxid, Natriumcarbonat, Kaliumcarbonat, Natriumhydrogencarbonat, Kaliumhydrogencarbonat, Calciumhydroxid, Calciumcarbonat.
Bevorzugt wird eine Säure oder eine Base verwendet, welche mit dem Abwasser derart reagiert, dass eine chemisch möglichst einheitliche Lösung generiert wird. Besonders bevorzugt ist daher die Verwendung einer Säure (oder Base), deren konjugierte Base (oder Säure) als Anion (oder Kation) eines Salzes bereits in der Reaktionsmischung enthalten ist. Auf diese Weise wird eine Salzlösung erhalten, welche lediglich ein chemisch definiertes, gelöstes Salz enthält, welches somit einen Wertstoff darstellt.
Im Falle eines Abwassers, welches Natriumhydroxid und Natriumchlorid enthält, ist daher die Verwendung von Salzsäure bevorzugt. Auf diese Weise entsteht eine wässrige Lösung von Natriumchlorid, welche keine weiteren anorganischen Salze enthält. Im Falle eines Abwassers, welches Natriumhydroxid und Natriumsulfat enthält, ist daher die Verwendung von Schwefelsäure bevorzugt. Auf diese Weise entsteht eine wässrige Lösung von Natriumsulfat, welche keine weiteren anorganischen Salze enthält. Im Falle eines Abwassers, welches Natriumhydroxid und Natriumnitrat enthält, ist daher die Verwendung von Salpetersäure bevorzugt. Auf diese Weise entsteht eine wässrige Lösung von Natriumnitrat, welche keine weiteren anorganischen Salze enthält. Diese Reihe lässt sich analog für andere denkbare Abwasserströme fortsetzen.

Die Temperatur, bei welchem Schritt e) durchgeführt wird, ist prinzipiell nicht beschränkt. Bevorzugt wird Schritt e) bei einer Temperatur im Bereich von 0-150°C, besonders bevorzugt bei einer Temperatur im Bereich von 10-100°C, ganz besonders bevorzugt im Bereich von 20-80°C durchgeführt. Der Druck, bei welchem Schritt d) durchgeführt wird, ist prinzipiell nicht beschränkt. Bevorzugt wird Schritt d) bei einem Druck im Bereich von 1-10 bar, besonders bevorzugt bei einem Druck im Bereich von 1-6 bar, ganz besonders bevorzugt im Bereich 1-3 bar durchgeführt.
"Einstellung des pH-Wertes der eingesetzten, zweiten, dritten, vierten und/oder fünften wässrigen Lösung" bedeutet dabei, dass die Einstellung des pH-Wertes in Schritt e) dabei prinzipiell zu jeden Zeitpunkt des erfindungsgemäßen Verfahrens stattfinden kann. Der Schritt e) kann somit mit der eingesetzten wässrigen Phase [also vor dem Schritt a)] und/oder mit der zweiten wässrigen Phase [also zwischen den Schritten a) und b)] und/oder mit der dritten wässrigen Phase [also zwischen den Schritten b) und c)] und/oder mit der vierten wässrigen Phase [also zwischen den Schritten c) und d)] und/oder mit der fünften wässrigen Phase [also nach Schritt d)] durchgeführt werden.

Im Falle der oben genannten Ausführungsform, in welcher sich Schritt d) direkt an Schritt c) anschließt, kann in Schritt e) der pH-Wert der eingesetzten, zweiten, vierten und/oder fünften wässrigen Phase mit einem Hilfsstoff eingestellt wird.

Wird der Schritt e) nach der Wasserdestillation [Schritt c)] durchgeführt, ist ohne weitere sich an das Verfahren anschließende Schritte keine Isolierung des Salzes als Feststoff möglich, und die Konzentration des Salzes kann nicht beliebig hoch eingestellt werden. Im Schritt e) wird deshalb bevorzugt der pH-Wert der eingesetzten, der zweiten und/oder der dritten wässrigen Phase mit einem Hilfsstoff eingestellt wird.

Im Falle der oben genannten Ausführungsform, in welcher sich Schritt d) direkt an Schritt c) anschließt, wird im Schritt e) somit bevorzugt der pH-Wert der eingesetzten und/oder zweiten wässrigen Phase mit einem Hilfsstoff eingestellt. Besonders bevorzugt wird im Schritt e) der pH-Wert der zweiten wässrigen Phase eingestellt.

Nach erfolgter Durchführung der Schritte a) bis e) (in einer der genannten möglichen Reihenfolgen) ist das erfindungsgemäße Verfahren vollständig durchgeführt. Die eingesetzte wässrige Phase, bevorzugt der Abwasserstrom aus dem TAA-Prozess wurde derart aufgereinigt, dass die beiden größten anfallenden Ströme in der Aufarbeitung entweder einer Kläranlage zugeführt werden können bzw. direkt an die Umwelt abgegeben werden können {abgetrennte wässrige Phase, die das aus der dritten Phase entfernte Wasser umfasst [Schritt c)]} oder die wässrige Lösung eines Reinstoffs darstellen, welcher einen kommerziellen Wert besitzt [fünfte wässrige Phase aus Schritt d)].

In einer weiteren vorteilhaften Ausführungsform kann das in Schritt a) erhaltene Extrakt in einem weiteren Schritt f) aufgearbeitet werden. Diese Aufarbeitung erfolgt bevorzugt durch Destillation. Dabei erfolgt eine bevorzugt destillative Auftrennung zwischen dem Lösungsmittel und den extrahierten organischen Bestandteile. In der bevorzugten Ausführungsform, in welcher eine Destillation erfolgt, erfolgt diese z.B. an einer Destillationskolonne. Eine Destillation kann diskontinuierlich oder kontinuierlich erfolgen. Dabei wird ein geeigneter Behälter (z.B. Doppelmantelreaktor, Reaktor mit externem Wärmetauscher, Reaktor mit innenliegendem Wärmetauscher) sowie eine für die Trennaufgabe geeignete Destillationskolonne (z.B. Bodenkolonnen, Füllkörperkolonnen oder Kolonnen mit strukturierten Packungen) verwendet.
Der Druck, bei welchem Schritt f) durchgeführt wird, ist prinzipiell nicht beschränkt. Bevorzugt wird Schritt f) bei einem Druck im Bereich von 0.1-10 bar, besonders bevorzugt bei einem Druck im Bereich von 0.5-5 bar, ganz besonders bevorzugt im Bereich 1-3 bar und am bevorzugtesten bei Normaldruck durchgeführt.
Bei einer diskontinuierlichen Destillation kann zunächst ein Vorlauf aufgefangen werden, welcher niedrig siedende extrahierten Substanzen erhält (z.B. Aceton), deren Siedepunkt unter dem des für die Extraktion verwendeten Lösungsmittels liegt oder welche mit dem Extraktionsmittel ein Azeotrop bilden, dessen Siedepunkt und dem des reinen Extraktionsmittels liegt. Anschließend kann eine Reinfraktion des Extraktionsmittels aufgefangen werden, welches anschließend in Schritt a) wiederverwendet werden kann. Im Sumpf der Destillation verbleiben diejenigen extrahierten Komponenten, welche einen höheren Siedepunkt als das Extraktionsmittel besitzen (z.B. TAA).

In einer weiteren vorteilhaften Ausführungsform des erfindungsgemäßen Verfahrens wird aus der fünften wässrigen Phase in einem weiteren Schritt g) das Produkt der Abwasseraufarbeitung in Form eines Feststoffes isoliert. Dies bietet den Vorteil, dass das Produkt der Abwasseraufarbeitung als fester Reinstoff (statt in Form einer Lösung) erhalten wird.
Die Herstellung des Feststoffes kann dabei durch alle bekannten Verfahren erfolgen. So kann z.B. eine Kristallisation, durch Temperaturerniedrigung, durch weitere Entfernung von Lösungsmittel oder durch Kombination dieser Schritte erfolgen. Die Isolierung des Feststoffes kann z.B. durch Filtration, Zentrifugation oder andere geeignete Verfahren erfolgen.
Zur Erhöhung der Reinheit des resultierenden Feststoffes können alle bekannten Verfahren angewandt werden, so z.B. Waschen mit einer geeigneten Waschflüssigkeit [d.h. eine Lösungsmittel, in dem der Feststoff eine geringe Löslichkeit besitzt, wohingegen vorhandene Verunreinigungen eine hohe Löslichkeit besitzen, z.B. alle zur Extraktion in a) genannten organischen Lösungsmittel], Umkristallisation aus einem geeigneten Lösungsmittel (d.h. ein Lösungsmittel, in dem der Feststoff bei hoher Temperatur eine gute Löslichkeit besitzt, z.B. Wasser) oder anderen geeigneten Verfahren.
Der resultierende Feststoff kann nach einem geeigneten Verfahren getrocknet werden (z.B. Schaufeltrockner, Plattentrockner etc.).
Die bei der Isolation des Feststoffes entstehende Mutterlauge kann in Schritt a) oder in Schritt c) rückgeführt werden und stellt somit keinen Abfallstrom dar.

Das erfindungsgemäße Verfahren löst die oben beschriebene Aufgabe aufgrund der folgenden erfindungsspezifischen Aspekte:
Die im Abwasser enthaltene Mischung aus einem neutralen Salz und einer Base/Säure wird durch Verwendung einer Säure/Base bei der Einstellung des pH-Wertes in Schritt e) in eine chemisch einheitliche neutrale Salzlösung überführt. Diese ist als Wertstoff weiter verwertbar. Speziell bei Herstellung einer Natriumnitrat-Lösung bieten sich zahlreiche Anwendungsfelder (als Düngemittel, als Zusatz für die Zementherstellung).
Die organische Belastung der resultierenden Substanzströme (Wasserdestillat und Wertstoff aus den Schritten c) und g) wird auf einen sehr niedrigen Wert reduziert. Auf diese Weise kann das Wasserdestillat direkt an eine Kläranlage abgegeben werden. Der resultierende Wertstoff ist nicht durch organische Bestandteile belastet.
Die organischen Bestandteile werden an mehreren Punkten des Prozesses gezielt isoliert [bei dem bevorzugt durch Destillation/Strippung durchgeführten Schritt c), am Adsorptionsmittel im Schritt d), im Extrakt aus Schritt a) bei Aufarbeitung des Extraktes in Schritt f)], so dass nur eine minimale Menge an Stoffen entsteht, welche als Abfall entsorgt werden müssen.

Das erfindungsgemäße Verfahren weist folgende überraschenden Vorteile auf:
Die Kombination der Schritte a) und c) ermöglicht die Herstellung eines hochreinen Wasserdestillates in c). Es muss lediglich ein sehr kleiner, organisch belasteter Vorlauf abgenommen werden, welcher als Abfall zu entsorgen ist. Das folgende Wasserdestillat bedarf keiner weiteren speziellen Behandlung und kann direkt an eine Kläranlage abgegeben werden.
Erfolgt vor der bevorzugt durch Destillation ausgeführten Wasserentfernung im Schritt c) keine Extraktion, so kann auch in einer fraktionierten Destillation kein reines Wasser als Hauptfraktion erhalten werden. Die organischen Nebenkomponenten, welche einen ähnlichen Siedepunkt wie Wasser besitzen, müssen also zunächst durch Extraktion weitestgehend entfernt werden, da sie sich destillativ nicht vom Wasser trennen lassen.
Durch Verwendung einer geeigneten Säure/Base bei der Einstellung des pH-Wertes kann eine chemisch einheitliche Salzlösung [Schritte c), d) und e)] bzw. ein chemisch reiner Feststoff in Schritt g) erhalten werden. Durch Verwendung der geeigneten Säure/Base wird die Bildung von gemischten Salzlösungen bzw. Mischsalzen vermieden.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.
Nachfolgend wird die vorliegende Erfindung anhand von Beispielen näher erläutert.

### Beispiele

### 1. Verwendete Meßmethoden

### 1.1 Bestimmung des Nitratgehaltes

Die Bestimmung der Nitrationen erfolgte über lonenchromatographie gemäß DIN EN ISO 10304. Als Gerät wurde ein Metrohm lonenchromatograph mit Leitfähigkeitdetektion genutzt.

Due verwendete Säule war eine Metrohm Metrosep Anion Dual 2. Als Eluent wurde eine wässrige Lösung von 2.0 mmol NaHCO₃, 1.3 mmol Na₂CO₃, 2% Aceton genutzt. Es wurden Injektionsschleifen von 10 µl bzw. 100 µl (für Proben mit einem Grenzwert < 20 mg/kg) genutzt. Der Kalibrierbereich der 10 µl-Schleife lag bei 0.5-100 mg/l. Der Kalibrierbereich der 100 µl-Schleife lag bei 0.05-2.0 mg/l.

### 2.1 Bestimmung des Gehaltes an organischen Komponenten

Die Bestimmung des Gehaltes aller organischen Komponenten wurde mit Gaschromatographie an einem Gaschromatograph HP 5890 durchgeführt. Die benutzte Säule war eine HP-50+, 30m x 0,25 mm x 0,25 mm. Als Trägergas wurde Stickstoff genutzt. Die Temperatur des Detektors lag bei 280°C, die Temperatur des Injektors lag bei 250°C. Das Temperaturprofil war 50°C für 2 min, dann Aufheizung mit einer Rate von 5°C / min auf 260°C (0 min).

### 3.1 TOC-Werte wurden an einem Shimadzu TOC-V CPN Total Organic Carbon Analyzer bestimmt. Farbzahlen (APHA) wurden mittels eines Dr. Lange LICO 200, mit Hilfe einer 5 cm Glasküvette bestimmt.

### 2. Experimentelles Beispiel zum Verfahren, Durchführung der Schritte a) - e):

Es soll ein Abwasserstrom behandelt werden, welcher Natriumnitrat, Natriumhydroxid und organische Verunreinigungen (vor allem Aceton, TAA) enthält. Dieser wird wie folgt behandelt:

### - Schritt a) Entfernung von ersten organischen Bestandteilen aus der eingesetzten wässrigen Phase durch Extraktion mit einem Extraktionsmittel und Erhalt einer zweiten wässrigen Phase

Es wird ein Abwasser ("eingesetzte wässrige Phase") enthaltend 16.3% NaNO₃ und 15.9% Natriumhydroxid eingesetzt. Dieser Strom ist mit organischen Komponenten belastet (TOC: 6700 ppm).

### a1) Extraktion mit Toluol:

500 g des Abwassers werden mit 50.0 g Toluol versetzt. Das zweiphasige Gemisch wird durch Schütteln homogenisiert, dann werden die Phasen getrennt (1. Extraktionsschritt). Man erhält eine wässrige Phase (495 g, TOC: 2030 ppm) sowie eine organische Phase (53.0 g). 480 g der wässrigen Phase aus dem 1. Extraktionsschritt werden erneut mit 50.0 g Toluol versetzt. Das zweiphasige Gemisch wird durch Schütteln homogenisiert, dann werden die Phasen getrennt (2. Extraktionsschritt). Man erhält eine wässrige Phase (480 g, TOC: 930 ppm) sowie eine organische Phase (50.0 g). 465 g der wässrigen Phase aus dem 2. Extraktionsschritt werden erneut mit 50.0 g Toluol versetzt. Das zweiphasige Gemisch wird durch Schütteln homogenisiert, dann werden die Phasen getrennt (3. Extraktionsschritt). Man erhält eine wässrige Phase ("zweite wässrige Phase"; 464 g, TOC: 921 ppm) sowie eine organische Phase (50.4 g).

### a2) Extraktion mit MTBE:

500 g des Abwassers werden mit 50.0 g MTBE versetzt. Das zweiphasige Gemisch wird durch Schütteln homogenisiert, dann werden die Phasen getrennt (1. Extraktionsschritt). Man erhält eine wässrige Phase (495 g, TOC: 4540 ppm) sowie eine organische Phase (53.8 g). 485 g der wässrigen Phase aus dem 1. Extraktionsschritt werden erneut mit 50.0 g MTBE versetzt. Das zweiphasige Gemisch wird durch Schütteln homogenisiert, dann werden die Phasen getrennt (2. Extraktionsschritt). Man erhält eine wässrige Phase (485 g, TOC: 1230 ppm) sowie eine organische Phase (50.1 g). 475 g der wässrigen Phase aus dem 2. Extraktionsschritt werden erneut mit 50.0 g MTBE versetzt. Das zweiphasige Gemisch wird durch Schütteln homogenisiert, dann werden die Phasen getrennt (3. Extraktionsschritt). Man erhält eine wässrige Phase ("zweite wässrige Phase"; 473 g, TOC: 990 ppm) sowie eine organische Phase (49.8 g).

### a3) Extraktion mit Methylisobutylketon

500 g des Abwassers werden mit 50.0 g Methylisobutylketon versetzt. Das zweiphasige Gemisch wird durch Schütteln homogenisiert, dann werden die Phasen getrennt (1. Extraktionsschritt). Man erhält eine wässrige Phase (499 g, TOC: 2644 ppm) sowie eine organische Phase (51.0 g). 490 g der wässrigen Phase aus dem 1. Extraktionsschritt werden erneut mit 50.0 g Methylisobutylketon versetzt. Das zweiphasige Gemisch wird durch Schütteln homogenisiert, dann werden die Phasen getrennt (2. Extraktionsschritt). Man erhält eine wässrige Phase (485 g, TOC: 3120 ppm) sowie eine organische Phase (54.1 g). 475 g der wässrigen Phase aus dem 2. Extraktionsschritt werden erneut mit 50.0 g Methylisobutylketon versetzt. Das zweiphasige Gemisch wird durch Schütteln homogenisiert, dann werden die Phasen getrennt (3. Extraktionsschritt). Man erhält eine wässrige Phase (471 g, TOC: 2040 ppm) sowie eine organische Phase (55.2 g).

### - Schritt e) Einstellung des pH-Wertes der zweiten wässrigen Phase mit einem Hilfsstoff

e1) 450 g des extrahierten Abwassers aus (a1) [enthaltend 73.4 g NaOH und 71.6 g NaNO₃, pH-Wert >14] werden unter Kühlung mit Salpetersäure (65%, 173 g) versetzt. Es wird eine gelbliche Lösung mit einem pH-Wert von 7 und einem TOC von 620 ppm erhalten.

e2) 450 g des extrahierten Abwassers aus (a2) [enthaltend 73,4 g NaOH und 71,6 g NaNO₃, pH-Wert >14] werden unter Kühlung mit Salpetersäure (65%, 173 g) versetzt. Es wird eine gelbliche Lösung mit einem pH-Wert von 7 und einem TOC von 180 ppm erhalten.

e3) 450 g des extrahierten Abwassers aus (a3) [enthaltend 73,4 g NaOH und 71,6 g NaNO₃, pH-Wert >14] werden unter Kühlung mit Salpetersäure (65%, 173 g) versetzt. Es wird eine gelbliche Lösung mit einem pH-Wert von 7 und einem TOC von 1410 ppm erhalten.

### - Schritt b) Entfernung von zweiten (leicht flüchtigen) organischen Bestandteilen aus der zweiten wässrigen Phase, wobei eine dritte wässrige Phase erhalten wird und Schritt c) Entfernen von Wasser aus der dritten wässrigen Phase zur Einstellung der Konzentration der Lösung, wobei eine vierte wässrige Phase erhalten wird

b+c1) 1000 g des neutralisierten Abwassers aus (e1), enthaltend 364 g Natriumnitrat, werden bei Normaldruck (1 bar) fraktioniert destilliert. Dabei wird ein Wasserdestillat (Kopftemperatur 100°C) erhalten, wobei die einzelnen Fraktionen in unterschiedlicher Weise mit organischen Komponenten belastet sind. Es werden folgende Fraktionen isoliert:

**Tabelle 1: Entfernung von leicht flüchtigen Bestandteilen und Entfernen von Wasser, Beispiel 1.**

| **Fraktion** | **Masse** | **TOC** |
|---|---|---|
| | g | ppm |
| 1 | 51.6 | 22 000 |
| 2 | 28.7 | 674 |
| 3 | 190 | 85 |

Man erhält einen gelblich-braunen Destillationssumpf ("vierte wässrige Phase"; 728 g, enthaltend 364 g NaNO₃, TOC: 670 ppm).
Die erhaltene Destillatfraktion 3 (70.3% des Gesamtdestillates) ist nur sehr wenig mit organischen Komponenten belastet und eignet sich daher für die Abgabe an eine Kläranlage. Es müssen lediglich die Destillatfraktionen 1 und 2 (29.7% des Gesamtdestillates) einer Sonderentsorgung zugeführt werden.

b+c2) 1000 g des neutralisierten Abwassers aus (e2), enthaltend 364 g Natriumnitrat, werden bei Normaldruck (1 bar) fraktioniert destilliert. Dabei wird ein Wasserdestillat (Kopftemperatur 100°C) erhalten, wobei die einzelnen Fraktionen in unterschiedlicher Weise mit organischen Komponenten belastet sind. Es werden folgende Fraktionen isoliert:

**Tabelle 2: Entfernung von leicht flüchtigen Bestandteilen und Entfernen von Wasser, Beispiel 2.**

| **Fraktion** | **Masse** | **TOC** |
|---|---|---|
| | g | ppm |
| 1 | 75.3 | 23 500 |
| 2 | 64.5 | 102 |
| 3 | 132 | 60 |

Man erhält einen gelblich-braunen Destillationssumpf ("vierte wässrige Phase";728 g, enthaltend 364 g NaNO₃, TOC: 490 ppm).
Die erhaltenen Destillatfraktionen 2 und 3 (72.3% des Gesamtdestillates) sind nur sehr wenig mit organischen Komponenten belastet und eignen sich daher für die Abgabe an eine Kläranlage. Es muss lediglich die Destillatfraktionen 1 (27.7% des Gesamtdestillates) einer Sonderentsorgung zugeführt werden.

b+c3) 1000 g des neutralisierten Abwassers aus (e3), enthaltend 364 g Natriumnitrat, werden bei Normaldruck (1 bar) fraktioniert destilliert. Dabei wird ein Wasserdestillat (Kopftemperatur 100°C) erhalten, wobei die einzelnen Fraktionen in unterschiedlicher Weise mit organischen Komponenten belastet sind. Es werden folgende Fraktionen isoliert:

**Tabelle 3: Entfernung von leicht flüchtigen Bestandteilen und Entfernen von Wasser, Beispiel 3.**

| **Fraktion** | **Masse** | **TOC** |
|---|---|---|
| | g | ppm |
| 1 | 36.7 | 15 200 |
| 2 | 42.5 | 216 |
| 3 | 185 | 89 |

Man erhält einen gelblich-braunen Destillationssumpf ("vierte wässrige Phase";728 g, enthaltend 364 g NaNO3, TOC: 570 ppm).
Die erhaltene Destillatfraktion 3 (70.0% des Gesamtdestillates) ist nur sehr wenig mit organischen Komponenten belastet und eignet sich daher für die Abgabe an eine Kläranlage. Es müssen lediglich die Destillatfraktionen 1 und 2 (30.0% des Gesamtdestillates) einer Sonderentsorgung zugeführt werden.

### - Schritt d) Entfernung von dritten (d.h. verbliebenen nicht flüchtigen organischen Bestandteilen) aus der vierten wässrigen Phase und Aufhellung der vierten wässrigen Phase, wobei eine fünfte wässrige Phase erhalten wird.

1000 g des Destillationssumpfes aus (b+c2) [enthaltend 499 g Natriumnitrat, TOC: 490 ppm, APHA: 297] werden mit 5.0 g Aktivkohle (Norit SA-Super) versetzt und die Mischung wird für 30 Minuten gerührt. Die Aktivkohle wird über einen Papierfilter abgetrennt und man erhält 998 g einer klaren, farblosen Lösung ("fünfte wässrige Phase"), enhaltend 498 g Natriumnitrat (TOC: 63 ppm, APHA: 2).

Dieser Schritt wurde wiederholt, wobei unterscheidliche Mengen an Aktivkohle zugegeben wurden. Dies ist in der folgenden Tabelle 4 gezeigt.

| **Zugabe Aktivkohle** | **TOC** | **APHA** |
|---|---|---|
| g | ppm | - |
| 1 | 154 | 2 |
| 5 | 63 | 2 |
| 10 | 50 | 1 |
| 20 | 35 | 1 |

### - Schritt f) Aufarbeitung des Extraktes aus Schritt (a)

### f1) Aufarbeitung des Extraktes aus (a1)

Die vereinigten organischen Phasen (153 g) aus (a1) werden in einer Destillationsapparatur bei 50 mbar und 80°C zum Sieden erhitzt. Es werden 137 g eines Destillates erhalten, welches neben Toluol (98.6%) auch Aceton (1.4%) enthält.

Dieses Destillat kann erneut zur Extraktion in Schritt (a) eingesetzt werden, dies entspricht einer Toluol-Rückführungsquote von 88.1%.

### f2) Aufarbeitung des Extraktes aus (a1)

Die vereinigten organischen Phasen (154 g) aus (a1) werden in einer Destillationsapparatur bei 1000 mbar zum Sieden (56°C) erhitzt. Es werden 138 g eines Destillates erhalten, welches neben MTBE (98.9%) auch Aceton (1.1%) enthält.

Dieses Destillat kann erneut zur Extraktion in Schritt (a) eingesetzt werden, dies entspricht einer MTBE-Rückführungsquote von 89.0%.

### f3) Aufarbeitung des Extraktes aus (a1)

Die vereinigten organischen Phasen (160 g) aus (a1) werden in einer Destillationsapparatur bei 1000 mbar zum Sieden (116°C) erhitzt. Es werden 140 g eines Destillates erhalten, welches neben Methylisobutylketon (96.7%) auch Aceton (3.3%) enthält.

Dieses Destillat kann erneut zur Extraktion in Schritt (a) eingesetzt werden, dies entspricht einer MTBE-Rückführungsquote von 90.2%.

### g) Isolierung eines Feststoffes

1000 g des neutralisierten Abwassers aus (e2), enthaltend 364 g Natriumnitrat, werden bei Normaldruck (1 bar) fraktioniert destilliert. Dabei wird ein Wasserdestillat (Kopftemperatur 100°C) erhalten, wobei die einzelnen Fraktionen in unterschiedlicher Weise mit organischen Komponenten belastet sind. Es werden folgende Fraktionen isoliert:

**Tabelle 4: Entfernung von leicht flüchtigen Bestandteilen und Entfernen von Wasser, Beispiel 2.**

| **Fraktion** | **Masse** | **TOC** |
|---|---|---|
| | g | ppm |
| 1 | 75.3 | 23 500 |
| 2 | 64.5 | 102 |
| 3 | 132 | 60 |
| 4 | 209 | 53 |

Die enstehende Suspension (518 g) wird auf Raumtemperatur abgekühlt und filtriert. Man erhält einen Feststoff von Natriumnitrat (210 g, Reinheit >99,9%) und eine Mutterlauge (305 g, enthaltend 153 g Natriumnitrat).

### Vergleichsbeispiel: Destillation ohne vorherige Extraktion

Zu 500 g des Abwasser ("eingesetzte wässrige Phase"; enthaltend 16.3% NaOH und 15.9% Natriumhydroxid, TOC: 6700 ppm) wird unter Kühlung Salpetersäure (65%, 193 g) gegeben. Es wird eine gelbliche Lösung, enthaltend 252 g NaNO3, mit einem pH-Wert von 7 und einem TOC von 5020 ppm erhalten. Diese Lösung wird bei Normaldruck (1 bar) fraktioniert destilliert. Dabei wird ein Wasserdestillat (Kopftemperatur 100°C) erhalten, wobei die einzelnen Fraktionen in unterschiedlicher Weise mit organischen Komponenten belastet sind. Es werden folgende Fraktionen isoliert:

**Tabelle 5: Entfernung von leicht flüchtigen Bestandteilen und Entfernen von Wasser unter Auslassen von Schritt (a).**

| **Fraktion** | **Masse** | **TOC** |
|---|---|---|
| | g | ppm |
| 1 | 17.4 | 173000 |
| 2 | 28.3 | 3480 |
| 3 | 25.9 | 520 |
| 4 | 26.1 | 310 |
| 5 | 36.0 | 200 |
| 6 | 35.4 | 170 |
| 7 | 38.0 | 210 |

Es lässt sich deutlich erkennen, dass sich ohne vorherige Extraktion keine Destillatfraktion erhalten lässt, welche nur über eine sehr geringe Belastung an organischen Komponenten (TOC < 100 ppm) verfügt. Die Fraktionen 5-7, welche über die niedrigsten TOC Werte aller Fraktionen besitzen, machen zudem nur 52.8% des Gesamtdestillates aus.

Wie bei der Gegenüberstellung der erfindungsgemäßen Beispiele und des Vergleichsbeispiels ersichtlich, kann durch Destillation allein kein niedriger TOC im Destillat erreicht werden kann. Nur in der Kombination aus Extraktion und Destillation, also Schritten a) und c), ist dies möglich. Durch weitere Behandlung mit Aktivkohle kann der TOC im Sumpf, der vierten wässrigen Phase, weiter abgesenkt werden. Die Behandlung mit Aktivkohle erfolgt nicht direkt im Anschluss an Schritt a), da dann die Menge an Aktivkohle stark erhöht werden müsste. Zudem wäre dann eine Einstellung der Konzentration nicht möglich.

## Patentansprüche

1. Verfahren zur Behandlung einer eingesetzten wässrigen Phase, welche eine bei der Herstellung von Triacetonamin anfallende wässrige Lösung ist, bestehend aus
a) Entfernung von ersten organischen Bestandteilen aus der eingesetzten wässrigen Phase durch Extraktion mit einem Extraktionsmittel, wobei eine zweite wässrige Phase und ein das Extraktionsmittel enthaltendes Extrakt erhalten werden;
b) Entfernung von zweiten organischen Bestandteilen aus der zweiten wässrigen Phase durch Destillation und/oder Strippung, wobei eine dritte wässrige Phase erhalten wird;
c) Entfernung von Wasser aus der dritten wässrigen Phase durch Destillation, wobei eine vierte wässrige Phase und eine abgetrennte wässrige Phase erhalten werden, wobei die abgetrennte wässrige Phase das aus der dritten Phase entfernte Wasser umfasst;
d) Entfernung von dritten organischen Bestandteilen aus der vierten wässrigen Phase und Aufhellung der vierten wässrigen Phase durch Adsorption, wobei eine fünfte wässrige Phase erhalten wird;
wobei in einem zusätzlichen Schritt e) ein pH-Wert der eingesetzten, zweiten, dritten, vierten und/oder fünften wässrigen Phase mit einem Hilfsstoff eingestellt wird.

2. Verfahren nach Anspruch 1, **dadurch gekennzeichnet, dass** sich Schritt c) direkt an Schritt b) anschließt und im Schritt e) der pH-Wert der eingesetzten, zweiten, vierten und/oder fünften wässrigen Phase mit einem Hilfsstoff eingestellt wird.

3. Verfahren nach Anspruch 1, **dadurch gekennzeichnet, dass** im Schritt e) der pH-Wert der eingesetzten, zweiten und/oder dritten wässrigen Phase mit einem Hilfsstoff eingestellt wird.

4. Verfahren gemäß einem oder mehreren der Ansprüche 1 bis 3, **dadurch gekennzeichnet, dass** in einem zusätzlichen Schritt f) das in Schritt a) erhaltene Extrakt aufgearbeitet wird, wobei eine Auftrennung zwischen den extrahierten organischen Bestandteilen und dem Extraktionsmittel erfolgt.

5. Verfahren gemäß einem oder mehreren der Ansprüche 1 bis 4, **dadurch gekennzeichnet, dass** in einem zusätzlichen Schritt g) ein Feststoff aus der fünften wässrigen Phase isoliert wird.

6. Verfahren gemäß einem oder mehreren der Ansprüche 1 bis 5, **dadurch gekennzeichnet, dass** das Extraktionsmittel in Schritt a) ausgewählt ist aus der Gruppe bestehend aus aliphatischen Lösungsmitteln, aromatischen Lösungsmitteln, Ethern, halogenierten Lösungsmitteln, Estern, Ketonen.

7. Verfahren gemäß einem oder mehreren der Ansprüche 1 bis 6, **dadurch gekennzeichnet**, da dass das Massenverhältnis von eingesetzter wässriger Phase: Extraktionsmittel in Schritt a) 2:1 bis 40:1 beträgt.

8. Verfahren gemäß einem oder mehreren der Ansprüche 1 bis 7, **dadurch gekennzeichnet, dass** es sich bei dem in Schritt e) verwendeten Hilfsstoff um eine Base handelt.

9. Verfahren gemäß einem oder mehreren der Ansprüche 1 bis 8, **dadurch gekennzeichnet, dass** der pH-Wert der wässrigen Phase nach Einstellung des pH-Werts in Schritt e) im Bereich pH 5 bis pH 9 liegt.

10. Verfahren gemäß einem oder mehreren der Ansprüche 1 bis 9, **dadurch gekennzeichnet, dass** die Entfernung von dritten organischen Bestandteilen aus der vierten wässrigen Phase und Aufhellung der vierten wässrigen Phase in Schritt d) durch Adsorption mit Hilfe eines Adsorptionsmittels erfolgt und das Adsorptionsmittel ausgewählt ist aus der Gruppe bestehend aus Aktivkohle, Zeolithe, Kieselgel.

11. Verfahren gemäß einem oder mehreren der Ansprüche 1 bis 10, **dadurch gekennzeichnet, dass** die zweiten organischen Bestandteilen in Schritt b) ausgewählt sind aus der Gruppe bestehend aus Ammoniak, Aceton, Mesityloxid, Diacetonalkohol, Diacetonamin, Acetonin, TMDH-Pyridin, Pentan, Hexan, Heptan, Cyclohexan; Benzol; Diethylether, Dipropylether, Methyl-tert-Butylether; Dichlormethan, Chloroform, Tetrachlormethan; Methylacetat, Ethylacetat, Isopropylacetat.

## Claims

1. Process for treating a used aqueous phase, which is an aqueous solution which arises in the production of triacetoneamine, which consists of
a) removing first organic components from the used aqueous phase by extraction with an extraction medium, wherein a second aqueous phase and an extract containing the extraction medium are obtained;
b) removing second organic components from the second aqueous phase by distillation and/or stripping, wherein a third aqueous phase is obtained;
c) removing water from the third aqueous phase by distillation, wherein a fourth aqueous phase and a separated aqueous phase are obtained, wherein the separated aqueous phase comprises the water removed from the third phase;
d) removing third organic components from the fourth aqueous phase and clearing the fourth aqueous phase by absorption, wherein a fifth aqueous phase is obtained;
wherein, in an additional step e), a pH of the used, second, third, fourth and/or fifth aqueous phase is adjusted using an auxiliary.

2. Process according to Claim 1, **characterized in that** step c) follows step b) directly, and in step e), the pH of the used, second, fourth and/or fifth, aqueous phase is adjusted using an auxiliary.

3. Process according to Claim 1, **characterized in that**, in step e), the pH of the used, second and/or third aqueous phase is adjusted using an auxiliary.

4. Process according to one or more of Claims 1 to 3, **characterized in that**, in an additional step f), the extract obtained in step a) is worked up, wherein the extracted organic components are separated from the extraction medium.

5. Process according to one or more of Claims 1 to 4, **characterized in that**, in an additional step g), a solid is isolated from the fifth aqueous phase.

6. Process according to one or more of Claims 1 to 5, **characterized in that** the extraction medium in step a) is selected from the group consisting of aliphatic solvents, aromatic solvents, ethers, halogenated solvents, esters, ketones.

7. Process according to one or more of Claims 1 to 6, **characterized in that** the mass ratio of used aqueous phase:extraction medium in step a) is 2:1 to 40:1.

8. Process according to one or more of Claims 1 to 7, **characterized in that** the auxiliary used in step e) is a base.

9. Process according to one or more of Claims 1 to 8, **characterized in that** the pH of the aqueous phase after adjusting the pH in step e) is in the range pH 5 to pH 9.

10. process according to one or more of Claims 1 to 9, **characterized in that** the removal of third organic components from the fourth aqueous phase and clearing the fourth aqueous phase in step d) proceed by adsorption using an adsorbent and the adsorbent is selected from the group consisting of activated carbon, zeolites, silica gel.

11. Process according to one or more of Claims 1 to 10, **characterized in that** the second organic components in step b) are selected from the group consisting of ammonia, acetone, mesityl oxide, diacetone alcohol, diacetonamine, acetonin, TMDH-pyridine, pentane, hexane, heptane, cyclohexane; benzene; diethyl ether, dipropyl ether, methyl tert-butyl ether; dichloromethane, chloroform, tetrachloromethane; methyl acetate, ethyl acetate, isopropyl acetate.

## Revendications

1. Procédé pour le traitement d'une phase aqueuse utilisée, qui est une solution aqueuse formée lors de la production de triacétonamine, consistant en
a) élimination de premiers composants organiques de la phase aqueuse utilisée, par extraction à l'aide d'un agent d'extraction, avec obtention d'une deuxième phase aqueuse et d'un extrait contenant l'agent d'extraction ;
b) élimination de deuxièmes composants organiques de la deuxième phase aqueuse, par distillation et/ou strippage, avec obtention d'une troisième phase aqueuse ;
c) élimination d'eau de la troisième phase aqueuse par distillation, avec obtention d'une quatrième phase aqueuse et d'une phase aqueuse séparée, la phase aqueuse séparée comprenant l'eau éliminée de la troisième phase aqueuse ;
d) élimination de troisièmes composants organiques de la quatrième phase aqueuse et clarification de la quatrième phase aqueuse par adsorption, avec obtention d'une cinquième phase aqueuse ;
dans une étape e) supplémentaire, un pH de la phase aqueuse utilisée, de la deuxième, troisième, quatrième et/ou cinquième phase aqueuse étant ajusté à l'aide d'un adjuvant.

2. Procédé selon la revendication 1, **caractérisé en ce que** l'étape c) fait directement suite à l'étape b) et dans l'étape e) on ajuste à l'aide d'un adjuvant le pH de la phase aqueuse utilisée, de la deuxième, quatrième et/ou cinquième phase aqueuse.

3. Procédé selon la revendication 1, **caractérisé en ce que** dans l'étape e) on ajuste à l'aide d'un adjuvant le pH de la phase aqueuse utilisée, de la deuxième et/ou troisième phase aqueuse.

4. Procédé selon une ou plusieurs des revendications 1 à 3, **caractérisé en ce que** dans une étape f) supplémentaire on soumet à un traitement final l'extrait obtenu dans l'étape a), en effectuant une séparation entre les composants organiques extraits et l'agent d'extraction.

5. Procédé selon une ou plusieurs des revendications 1 à 4, **caractérisé en ce que** dans une étape supplémentaire g) on isole une matière solide de la cinquième phase aqueuse.

6. Procédé selon une ou plusieurs des revendications 1 à 5, **caractérisé en ce que** l'agent d'extraction dans l'étape a) est choisi dans le groupe constitué par des solvants aliphatiques, des solvants aromatiques, des éthers, des solvants halogénés, des esters, des cétones.

7. Procédé selon une ou plusieurs des revendications 1 à 6, **caractérisé en ce que** le rapport massique de phase aqueuse utilisée:agent d'extraction dans l'étape a) vaut de 2:1 à 40:1.

8. Procédé selon une ou plusieurs des revendications 1 à 7, **caractérisé en ce que** pour ce qui est de l'adjuvant utilisé dans l'étape e) il s'agit d'une base.

9. Procédé selon une ou plusieurs des revendications 1 à 8, **caractérisé en ce que** le pH de la phase aqueuse après ajustement du pH dans l'étape e) se situe dans l'intervalle de pH 5 à pH 9.

10. Procédé selon une ou plusieurs des revendications 1 à 9, **caractérisé en ce que** l'élimination de troisièmes composants organiques à partir de la quatrième phase aqueuse et la clarification de la quatrième phase aqueuse dans l'étape d) s'effectuent par adsorption à l'aide d'un agent d'adsorption et l'agent d'adsorption est choisi dans le groupe constitué par le charbon actif, les zéolithes, le gel de silice.

11. Procédé selon une ou plusieurs des revendications 1 à 10, **caractérisé en ce que** les deuxièmes composants organiques dans l'étape b) sont choisis dans le groupe constitué par l'ammoniac, l'acétone, l'oxyde de mésityle, le diacétone-alcool, la diacétonamine, l'acétonine, la TMDH-pyridine, le pentane, l'hexane, l'heptane, le cyclohexane ; le benzène ; l'oxyde d'éthyle, l'éther dipropylique, l'oxyde de méthyle et de tert-butyle, le dichlorométhane, le chloroforme, le tétrachlorométhane, l'acétate de méthyle, l'acétate d'éthyle, l'acétate d'isopropyle.
